# EUROPEAN PATENT SPECIFICATION

(11) **EP 3 694 307 B1**
(45) Date of publication and mention of the grant of the patent: **13.09.2023**
(21) Application number: 18865682.1
(22) Date of filing: 09.10.2018
(51) Int. Cl.: A01G 31/04, A01G 9/14, A01G 24/30, A01G 24/44, A01G 24/23, A01G 24/18

(54) **HYDROPONIC GROWING MEDIUM**
HYDROPONISCHES WACHSTUMSMEDIUM
MILIEU DE CULTURE HYDROPONIQUE

(30) Priority: 09.10.2017 US 201762569888 P; 31.07.2018 US 201862712356 P
(43) Date of publication of application: 19.08.2020
(73) Proprietor: Profile Products L.L.C., Buffalo Grove, IL 60889 (US)
(72) Inventor: SPITTLE, Kevin Scott, Vero Beach Florida 32963 (US); BOWERS, Gary Lane, Jonesborough Tennessee 37659 (US)
(74) Representative: GPI Brevets
(86) International application number: PCT/US2018/054927
(87) International publication number: WO 2019/074875

(56) References cited:
- EP-A1- 1 457 107
- US-A- 3 467 609
- US-A- 4 023 308
- US-A- 5 741 832
- US-A1- 2003 051 398
- US-A1- 2006 291 963
- US-A1- 2013 298 458

## Description

### TECHNICAL FIELD

The present claims relate to a substrate that can be used for various hydroponic applications and a method of producing the same.

### BACKGROUND

Hydroponics is a subset of horticulture relating to a method of growing plants without soil, using mineral nutrient solutions in a water solvent. The plants may be grown without a substrate altogether such that only the plant roots are exposed to the mineral solution. Alternatively, the roots may be supported by a medium or substrate which is free of soil. Numerous types of substrates have been tested. For example, rock wool mats, cubes, and slabs have become popular. Other substrates include vermiculite, coir peat, or perlite. Yet, a further need exists to provide a more environmentally-friendly hydroponic growing medium with excellent hydroponic solution distribution capabilities designed to provide support for beneficial microorganisms.

The document WO 2004/098270 relates to a hydroponic plant growth medium. Specifically, this document provides a method for supporting hydroponic plant growth with the use of a medium containing cellulose fibers, bicomponent fibers, and synthetic fibers. Documents EP147107A1, US5741832A and US2012282031A1 were cited.

US 2003/051398 A1 discloses a hydroponic soil substitute comprising polymer fibers for use in plant cultivation.

### SUMMARY OF THE INVENTION

A hydroponic growing medium comprises a three-dimensional self-supporting, soil-free hydroponic substrate having a dry bulk density of about 1.8 lb/ft³ (28.83 kg/m³) to 10 lb/ft³ (160.185 kg/m³) and including about 2 to 10 weight % of a man-made fiber portion and about 90 to 98 weight % of a natural fiber portion having refined wood fiber, based on the total weight of the hydroponic growing medium.

A method of preparing said hydroponic growing medium comprises combining a loose metered volume of the man-made fiber portion with the natural fiber portion and reducing the fiber to a predetermined thickness to form a compressed matrix, exposing the compressed matrix to elevated temperatures to melt at least a portion of the fiber, and applying pressure to the compressed matrix to generate the three-dimensional structure of the hydroponic growing medium.

The presently disclosed hydroponic growing medium includes a natural fiber portion and a man-made fiber portion. The natural fiber portion and the man-made fiber portion may be mixed in a specific ratio, combined, and pressed together to form a slab. The hydroponic growing medium slab may have a dry bulk density of about 1.8 lb/ft³ (28.83 kg/m³) to 4.2 lb/ft³ (67.28 kg/m³). The slab may be housed within a plastic bag ready for shipment to a consumer. The hydroponic growing medium may serve as a growing medium for any hydroponic application throughout a growing season typically lasting about 10 to 12 months or longer with excellent results and increased sweetness of the grown fruit and vegetables.

### BRIEF DESCRIPTION OF THE DRAWINGS

FIGURE 1 provides a schematic flowchart illustrating the formation of the natural fiber portion of the presently disclosed hydroponic growing medium slab;
FIGURE 2 shows a schematic flowchart illustrating the formation of a hydroponic growing medium slab using the natural fiber formed according to Figure 1 and a man-made fiber portion;
FIGURE 3 shows a schematic perspective view of a hydroponic growing medium slab in a bag;
FIGURES 4A and 4B show non-limiting examples of perforated material within the bag housing the hydroponic growing medium;
FIGURES 5A-5C are photographs of a non-limiting example of the hydroponic growing medium slab disclosed herein;
FIGURE 5D is a photograph of a non-limiting example of a hydroponic growing medium propagation portion disclosed herein;
FIGURE 6 shows a schematic depiction of an example microwave oven capable of binding the natural and man-made fibers disclosed herein;
FIGURES 7A-9A are stereoscopic images of an example hydroponic growing medium at various magnifications;
FIGURES 7B-9B are stereoscopic images of an example prior art substrate taken at the same magnifications and of comparable thickness as respective growing medium depicted in FIGURES 7A-9A;
FIGURES 10-14 show volumetric water content at different pF values for non-limiting examples of the hydroponic growing media disclosed herein and a prior art substrate.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present invention. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except where expressly indicated, all numerical quantities in this description indicating dimensions or material properties are to be understood as modified by the word "about" in describing the broadest scope of the present disclosure.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

The description of a group or class of materials as suitable for a given purpose in connection with one or more embodiments of the present invention implies that mixtures of any two or more of the members of the group or class are suitable. Description of constituents in chemical terms refers to the constituents at the time of addition to any combination specified in the description and does not necessarily preclude chemical interactions among constituents of the mixture once mixed. The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Hydroponics, or soilless horticulture dates back to at least the 17^{th} century. At that time, the exploration of the solution hydroponics, or growing terrestrial plants without any substrate or inert medium contributed to understanding of essential elements and conditions for plant growth. While hydroponics gained its name due to plant growth in water, the term also encompasses cultivation of terrestrial plants in a substrate different from water as long as the substrate is free from soil. Nonlimiting example substrates include an expanded clay aggregate, growstones, coir or coco peat, rice husks, perlite, vermiculite, pumice, sheep wool, rock or mineral wool, brick shards, polystyrene packing peanuts, among other types.

In comparison with growing methods in soil, hydroponics presents several advantages. For example, the roots of the grown plants may have better access to the beneficial amount of oxygen, nutrients, and water than plants grown in soil. Yet, certain hydroponic substrates which are being used still have a variety of disadvantages. For example, polystyrene may release styrene absorbable into some plants and their fruit, which may present a health risk to the plant consumer. Other substrates such as brick shards may cause alteration of desirable pH. Yet alternative substrates may negatively affect hormones which regulate plant growth. Substrates such as peat may harden and become too dense with time.

One of the most commercially utilized hydroponic substrates has been rockwool. Rockwool, also known as mineral wool, is an inert substrate made from molten rock such as basalt and sand that is spun into bundles of single filament fibers. The fibers are bonded into a medium capable of capillary action. Rockwool growing media may be used in the form of slabs or cubes wrapped in a plastic packaging with several openings for drainage. The hydroponic fluid is fed to the top surface of the substrate and becomes available to the plants' root system as it percolates via the substrate due to gravitational forces. One of the disadvantages of the rockwool material is mechanical irritation of skin and lungs of a person handling the material, for example during manufacture or use. Another disadvantage is environmental burden as rockwool is very difficult to dispose of. Practically, after being used, the rockwool slabs may be buried, but rockwool does not decompose, and thus becomes an environmental burden. Additionally, rockwool has a high pH requiring adjustment of the hydroponic solution to arrive at a neutral pH in the zone of the root system. An overall maintenance of pH of the rockwool slabs is required as rockwool is subject to pH shifts. Additionally still, rockwool, due to its high water holding capacity (WHC), is susceptible to development and retention of plant diseases.

Thus, there is a need for a hydroponic growing medium overcoming one or more of the above-mentioned disadvantages.

In one or more embodiments, a hydroponic growing medium is disclosed. The hydroponic growing medium includes a mixture of a natural fiber portion and an artificial or manmade fiber portion. The term "growing medium" (GM) refers to a substrate, specifically a soil-free substrate or a combination of materials used to provide physical support, water retention, aeration, and/or nutrient supply for plant growth so that a plant can establish its root system within the growing medium and allow for root growth, as the roots grow in spaces between individual particles of the growing medium.

The natural fiber portion may include one or more wood components including wood chips, wood fiber, bark, leaves, needles, or their combination. The wood components may be derived from coniferous and/or deciduous trees and may be prepared by any convenient manner, for example as disclosed for wood fibers in U.S. 2,757,150. Any type of wood components may be used, for example wood components of the softwood varieties such as yellow poplar, cedar such as Western red cedar, fir such as Douglas fir, California redwood, and particularly pine such as Ponderosa, Sugar, White, and Yellow varieties of pine. Other useful wood components may come from oak, walnut, mahogany (*Swietenia macrophylla*, *Swietenia mahagoni*, *Swietenia humilis*), hemlock, Douglas fir, arborvitae, ash, aspen, basswood, butternut, hornbeam, beech, alder, elm, birch, hemlock, hickory, larch, locust, maple, cottonwood, chestnut, Sitka spruce, sycamore, sassafras, shadbush, willow, fruit trees like cheery, apple, and the like, and combinations thereof.

For example, wood components may refer to fibrous tree wood components including just fibrous tree wood or fibrous tree wood as well as fibrous tree bark, needles, leaves, chips, or a combination thereof. The term "bark" refers to a plurality of stem tissues including one or more of cork (phellum), cork cambium (phellogen), phelloderm, cortex, phloem, vascular cambium, and xylem.

Besides wood components named above, the natural fiber portion may include peat, coir, or both. Peat refers to partially decayed organic matter harvested from peatlands, bogs, mires, moors, or muskegs. Coir refers to fiber from the outer husk of the coconut.

The natural fiber portion may include about 5 to about 95 weight % of tree bark mixed with about 95 to about 5 weight % of wood components, coir, peat, or a combination thereof, based on the total weight of the natural fiber portion. The natural fiber portion may include 100 weight % fibrous pine wood components. The natural fiber portion may include about 10 weight % of tree bark, peat, coir, or a combination thereof, and about 90 weight % of wood components, based on the total weight of the natural fiber portion. The natural fiber portion may include about 20 to about 70 weight % of tree bark and about 30 to about 80 weight % of wood components, based on the total weight of the natural fiber portion. Alternatively, the natural fiber portion may include about 50 to about 60 weight % of tree bark and about 40 to about 50 weight % of wood components, based on the total weight of the natural fiber portion. The natural fiber portion may include about 90 weight % of tree bark and about 10 weight % of wood components, peat, coir, or a combination thereof, based on the total weight of the natural fiber portion.

The natural fiber portion may include 100% natural refined wood fiber, for example in the form of chips. Thus, the natural fiber portion may be free of any bark. Such embodiment may have an additional advantage of being free of components causing discoloration of the hydroponic solution once the hydroponic growing medium is being irrigated. While bark may cause discoloration of the solution, a bark-free natural refined wood fiber may keep the hydroponic solution clear or of the original color and thus enable an easier monitoring of nutrient levels. The fiber used may be pine wood fiber alone or in combination with other natural wood fiber.

The natural fiber portion may include about 0 to 20, 1 to 15, or 5 to 10 weight % of peat, about 0 to 30, 5 to 25, or 10 to 20 weight % coir, based on the total weight of the natural fiber portion. The remainder of the natural fiber portion may be formed by the wood components named above. In one or more embodiments, the natural fiber portion may include a substantial amount of peat or coir such that up to 50, 60, 70, 80, 90, or 100 weight % of the natural fiber portion is formed by peat, coir, or a combination thereof.

The bark, coir, peat, and/or wood components may be preprocessed in a variety of ways such as cut so that the dimensions of the wood components, coir, peat, and/or bark pieces are about 0.25 inches (0.64 cm) to about 6 inches long and wide, about 1 inch (2.54 cm) to about 4 inches (10.2 cm) long and wide, or about 2 inches (5 cm) to about 3 inches (7.6 cm) long and wide. The size of the wood components, coir, peat, and/or bark pieces may be about 2 x 2 inches (5 x 5 cm).

The dimensions of the fibers in the natural fiber portion, such as diameter, may be modified. The modification may be done in a refiner.

Overall, the natural fiber portion represents a well graded substrate which maintains hydraulic conductivity, high porosity, and provides a high percentage of available water to the plant, partially due to the particle distribution within the natural fiber portion. Example particle distribution of the natural fiber portion is listed below in Table 1. Tables 2 and 3 provide additional properties data of the natural fiber portion.

**Table 1 - Substrate particle distribution in the natural fiber portion of the hydroponic growing medium**

| **Sieves [Mesh/µm]** | **Particle Range [mm]** | **Particle Distribution [%]** |
|---|---|---|
| ¼" / 6300 | > 6.3 | 0.3 |
| #4 / 4750 | 4.75 - 6.2 | 0.1 |
| #8 / 2360 | 2.36 - 4.74 | 12.4 |
| #16 / 1180 | 1.18 -2.35 | 23.8 |
| #25 / 710 | 0.71 - 1.17 | 24.2 |
| #50 / 300 | 0.3 -0.7 | 21.5 |
| #100/150 | 0.15 -0.29 | 10.3 |
| Pan / <150 | < 0.15 | 7.3 |

**Table 2 - Average length to width ratio of particles in sieves #16 and #50 of the natural fiber portion**

| **Sieve #16/1180 µm** | | **Sieve #50/300 µm** | |
|---|---|---|---|
| 1.18-2.36 mm Particle Range | | 0.30-0.71 mm Particle Range | |
| Average length to Width Ratio Range | | Average length to Width Ratio Range | |
| Lower | Higher | Lower | Higher |
| 14.899 : 1 | 30.602 : 1 | 39.615 : 1 | 55.507 : 1 |

**Table 3 - Properties of two non-limiting examples of the natural fiber portion**

| **Components [%]** | **Volume of air space [vol. %]** | **Volume of air space - range [vol. %]** | **Dry bulk density** | | **Wet bulk density** | | **Moisture content [%]** |
|---|---|---|---|---|---|---|---|
| | | | [lb/ft³] | [kg/m³] | [lb/ft³] | [kg/m³] | |
| 80% wood, 20% bark | 30.25 | 25 - 75 | 2.37 | 37.96 | 2.83 | 45.33 | 90.99 |
| 100% pine wood fiber | 44.53 | 25 - 75 | 2.20 | 35.24 | 2.49 | 39.89 | 89.80 |

The data in Table 3 was collected by JR Peters Laboratory Allentown, PA, USA, using "Procedures for Determining Physical Properties of Horticultural Substrates Using the NCSU Porometer by Horticultural Substrates Laboratory," Department of Horticultural Science, North Carolina State University in Raleigh, North Carolina.

The percent volume of air space in Table 3, and elsewhere within this disclosure, refers to air holding capacity measured as the percent volume of a substrate that is filled with air after the material is saturated and allowed to drain. It is the minimum amount of air the material will have. The analysis using the NCSU Porometer was performed on a 28.3 inch³ (463.8 cm³) sample in a 3 x 3 inches (7.6 x 7.6 cm) aluminum cylinder.

The bulk density in Table 3, and elsewhere within this disclosure, refers to the ratio of the mass of dry solids to the bulk volume of the substrate. The bulk volume includes the volume of solids and pore space. The mass is determined after drying a packed core to constant weight at 221 °F (105°C), and volume is that of the sample in cylinders.

The moisture content in Table 3, and elsewhere within this disclosure, refers to the percent moisture found in a sample on a wet mass basis. This is calculated by: [(Wet weight - Dry weight)/Wet weight] X 100. The moisture content denotes how much of a particular sample is comprised of water.

In comparison to the density data of Table 3, in at least one embodiment, the initial density of the wood components, coir, peat, and/or bark before the wood components, coir, peat, and/or bark are formed into a natural fiber portion by the process described below may be about 15 lbs/ft³ (240.28 kg/m³) to about 35 lbs/ft³ (560.65 kg/m³) or 15, 16, 17, 18, 19, 20, 21, 22, 23, 24, 25, 26, 27, 28, 29, 30, 31, 32, 33, 34, or 35 lb/ft³.

The wood, coir, peat, and/or bark components may be combined with additional components. Examples of such additional components include, but are not limited to, fertilizer(s), macronutrient(s), micronutrient(s), mineral(s), binder(s), natural gum(s), interlocking manmade fiber(s), and the like, and combinations thereof. In general, these additional components in total are present in an amount of less than about 10 weight % of the total weight of the natural fiber portion. More preferably, the additional components in total are present in an amount from about 1 to about 15 weight % of the total weight of the natural fiber portion. Soil is absent from the natural fiber portion. Fertilizers such as nitrogen fertilizers, phosphate fertilizers, potassium fertilizers, compound fertilizers, and the like may be used in a form of granules, powder, prills, or the like. For example, melamine/formaldehyde, urea/formaldehyde, urea/melamine/formaldehyde and like condensates may serve as a slow-release nitrogenous fertilizer. Fertilizers having lesser nutritional value, but providing other advantages such as improving aeration, water absorption, or being environmental-friendly may be used. The source of such fertilizers may be, for example, animal waste or plant waste.

Nutrients are well-known and may include, for example, macronutrient, micronutrients, and minerals. Examples of macronutrients include calcium, chloride, magnesium, phosphorus, potassium, and sodium. Examples of micronutrients are also well-known and include, for example, boron, cobalt, chromium, copper, fluoride, iodine, iron, magnesium, manganese, molybdenum, selenium, zinc, vitamins, organic acids, and phytochemicals. Other macro- and micronutrients are well known in the art.

The binders may be natural or synthetic. For example, the synthetic binders may include a variety of polymers such as addition polymers produced by emulsion polymerization and used in the form of aqueous dispersions or as spray dried powders. Examples include styrenebutadiene polymers, styrene-acrylate polymers, polyvinylacetate polymers, polyvinylacetate-ethylene (EVA) polymers, polyvinylalcohol polymers, polyacrylate polymers, polyacrylic acid polymers, polyacrylamide polymers and their anionic- and cationic-modified copolymer analogs, i.e., polyacrylamide-acrylic acid copolymers, and the like. Powdered polyethylene and polypropylene may also be used. When used, synthetic binders are preferably used in aqueous form, for example as solutions, emulsions, or dispersions. While binders are not ordinarily used in growing media, they may be useful in hydraulically applied growing media.

Thermoset binders may also be used, including a wide variety of resole and novolac-type resins which are phenol/formaldehyde condensates, melamine/formaldehyde condensates, urea/formaldehyde condensates, and the like. Most of these are supplied in the form of aqueous solutions, emulsions, or dispersions, and are generally commercially available.

The natural binder may include a variety of starches such as corn starch, modified celluloses such as hydroxyalkyl celluloses and carboxyalkyl cellulose, or naturally occurring gums such as guar gum, gum tragacanth, and the like. Natural and synthetic waxes may also be used.

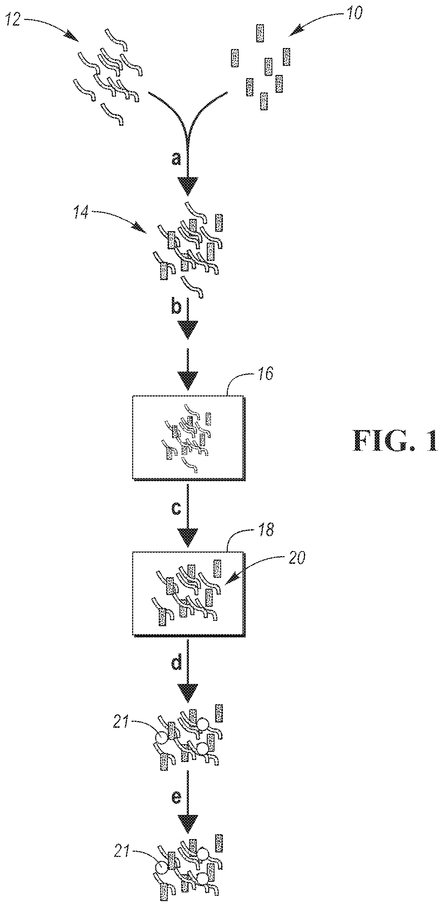

With reference to Figure 1, a schematic flowchart illustrating the formation of the natural fiber portion is provided. As can be seen in Figure 1, in step a), an initial composition 14 is formed by combining tree bark 10, coir 11, wood components 12, and/or peat 13 together to form the initial composition 14.

In step b), the initial composition 14 is heated to an elevated temperature to kill microorganisms in a pressurized vessel 16. Typically, the heating step may be conducted at a temperature in the range of about 250°F (121°C) or lower to about 500°F (260°C) or higher, about 300°F (149°C) to about 400°F (204°C), about 320°F (160°C) to 380°F (about 193°C). The heating step may be conducted for a time sufficient to kill microbes. The heating step may be conducted for about 1 to about 5 minutes or longer under a steam pressure of about 35 lbs/in² (2.4 kg/cm²) to about 120 lbs/in² (8.4 kg/cm²) or about 50 lbs/in² (3.5 kg/cm²) to about 100 lbs/in² (7.0 kg/cm²). For example, the heating step may be conducted at a temperature of about 300°F (149°C) for about 3 minutes at about 80 lbs/in² (5.6 kg/cm²). For example, the heating step may be conducted at a temperature of about 300°F (149°C) for about 3 minutes. The heating step results in a preferably substantially sterile natural fiber portion such that the natural fiber portion is free from bacteria or other living organisms. The steam flow rate during the heating step may be from about 4000 lbs/hour (1814 kg/hour) to about 15,000 lb/hour (6803 kg/hour).

An example of a pressurized vessel and related process for step b) is disclosed in U.S. Pat. No. 2,757,150 in which wood chips are fed to a pressurized steam vessel which softens the chips.

In step c), the initial composition 14 is processed through a refiner 18 to form the natural fiber portion 20. The refiner 18 may use a plurality of disks to obtain the natural fiber portion 20. The refiner 18 may use two or more disks, one of which is rotating, to separate wood, bark, peat, coir fibers from each other as set forth in U.S. Pat. No. 2,757,150. The refiner 18 is usually operated at a lower temperature than the temperature used in step b). The refiner 18 may be operated at a temperature in the range of about 70°F (21°C) to about 400°F (204°C), about 150°F (66°C) to about 350°F (176°C), about 200°F (93°C) to about 300°F (148°C). The refiner 18 may be operated under steam. The refiner 18 may be operated at atmospheric pressure or elevated pressures such as pressures of about 50 lb/in² (3.5 kg/cm²) or lower to about 100 lb/in² (7.0 kg/cm²). Some of the additional components 21 may be added during step c) such as a dye or a surfactant.

In step d), the natural fiber portion 20 is dried at temperatures of about 400°F (204°C) to about 600°F (316°C) for the time sufficient to reduce the moisture content of the natural fiber portion 20 to a value less than about 45 weight %, less than about 25 weight %, or less than about 15 weight %, based on the total weight of the natural fiber portion 20. The drying step may be about 1 to 10 seconds long, about 2 to 8 seconds long, about 3 to 5 seconds long. The drying step may be longer than 10 seconds. Exemplary equipment for drying of the natural fiber portion 20 in step d) may be a flash tube dryer capable of drying large volumes of the natural fiber portion 20 in a relatively short length of time due to the homogeneous suspension of the particles inside the flash tube dryer. While suspended in the heated gas stream, maximum surface exposure is achieved, giving the natural fiber portion 20 uniform moisture. The moisture content of the natural fiber portion 20 may be from about 10 to about 50 weight %, about 20 to about 40 weight %, about 25 to about 35 weight % of the total weight of the natural fiber portion 20.

The combination of steps b), c), and d) may result in a stable growing medium which may be sterile.

In an optional step e), the natural fiber portion 20 is further refined, and the additional components 21 set forth above may be added.

The natural fiber portion is subsequently combined with the man-made fiber portion. The natural fiber portion may be provided in the compressed and/or expanded form. The natural fiber portion to be mixed with the man-made fiber portion may have a density of about 17, 6203 to 28, 8332 kg/m³, 19, 2222 to 25,6295 kg/m³, or 20,824 to 24,0277 kg/m³ (respectively about 1.1 to 1.8 lbs/ft³, 1.2 to 1.6 lbs/ft³, or 1.3 to 1.5 lbs/ft³).

Likewise, the man-made fiber portion may be provided in the compressed and/or expanded form. If compressed man-man fiber is provided, decompression and expansion of the fiber is desirable such that the man-made fiber reaches a density of about 7,208309 to 12,01385 kg/m3, 8,00923 to10,412 kg/m3 or 8,810155 to 9,61108 kg/m3 (respectively about 0.45 to 0.75 lb/ft³, 0.5 to 0.65 lb/ft³, or 0.55 to 0.6 lb/ft³).

The man-made fiber may be a bicomponent fiber such that it contains at least two different types of material and/or fiber. The man-made fiber portion may include at least one kind of bicomponent fiber. The man-made fiber portion may include a plurality of bicomponent fibers, forming a mixture. Each fibrous piece may contain an outer shell made from the first fiber and an inner portion, a core, made from the second fiber. Having a bicomponent fiber may allow melting of a portion of the bicomponent fiber while allowing some of the fiber to remain in a non-melted state. Melting of the outer shell may enable adherence of the man-made fiber to the natural fiber portion while preserving structure of the man-made fiber as the inner core does not succumb to melting. Alternatively, a single component man-made fiber may be used in combination with an adhesive. The adhesive may be an adhesive named above.

The man-made fiber or bicomponent fiber may include any artificial fiber. The man-made fiber may include as a core, the outer shell, and/or the single component the following: thermoplastic fibers, polyolefins such as polyethylene, polypropylene, polyethylene terephthalate, polytetrafluoroethylene, polyphenylene sulfide, polyesters, polyethers such as polyethereketone, polyamide such as nylon 6, nylon 6,6, regenerated cellulose such as rayon, aramid, fiberglass, polybenzimidazole, carbon/graphite, a combination thereof, or the like. For example, bicomponent fiber may include a polyester core and a polypropylene outer shell or sheet or polyethylene or linear low density polyethylene outer shell. In another example, the bicomponent fiber may include a polypropylene core and a polyethylene outer shell. In a yet another example, a polyamide core and a polyolefin outer shell may be included. A non-limiting example of the man-made fiber being structured as a bicomponent fiber is shown in Table 4 below.

The man-made fiber may be hydrophobic or hydrophilic. The man-made fiber may be biodegradable such that the material used lasts for the length of the growing season, but is relatively easily biodegradable afterwards. Alternatively, if non-biodegradable man-made fiber is used, the man-made fiber may be separated from the remaining components of the hydroponic growing medium after use and recycled.

**Table 4 - Properties of an example bicomponent man-made fiber including a low melt fiber with a melting point of 110deg.C as an outer shell and polyester fiber with a melting temperature of 258deg.C forming the core of the man-made fiber.**

| **Property of the sheath material** | **Range of Control [unit]** |
|---|---|
| Denier | 14.00 ± 1.00 [g/9000M] |
| Strength | 3.30 ± 0.4 [g/DE] |
| Elongation | 80.00 ± 15.00 [%] |
| Crimp Number | 7.00 ± 2.00 [EA/Inch] |
| Oil Pick-up | 0.12 ± 0.05 [%] |
| Heat Shrinkage | 4.50 ± 2.00 [%] |
| Melting Point | 110 [deg.C] |
| Fiber Length | 51.0 ± 1.00 [mm] |

The man-made fiber may have denier of about 0.9 to about 15, 2 to 13, or 4 to 10 or 0.9, 1, 1.2, 1.5, 2, 2.5, 3, 4, 5, 6, 7, 8, 9, 10, 11, 12, 13, 14, or 15. Bicomponent fibers with higher denier values are also contemplated, for example denier of about 16 to 30, 18 to 25, or 20 to 24. It has been unexpectedly discovered that including bicomponent fibers of finer denier such as the values named above, a lower weight percentage of the bicomponent fiber may be included while achieving adequate or even more efficient bonding of the natural and man-made fiber than if man-made fibers of higher denier are used in higher weight percentage.

The length of the bicomponent fiber may vary such that a mixture of lengths may be included in the man-man fiber portion. Alternatively, fibers having significantly similar length may be included in the man-made fiber portion. The length of the man-made fiber may be about 12,7mm to 127mm, 25,4mm to 101,6mm, 38,1mm to 76,2mm, or 12,7mm, 25,4mm, 38,1mm, 50,8mm, 63,5mm, 76,2mm, 88,9mm, 101,6mm, 114,3mm or 127mm (respectively about 0.5 to 5 inches, 1 to 4 inches, or 1.5 to 3 inches or 0.5, 1, 1.5, 2, 2.5, 3, 3.5, 4, 4.5, or 5 inches).

The core material of the man-made fiber may have melting temperature of about 130°C to 260°C, 150°C to 220°C, or 180°C to 200°C. While the core may be located central with respect to the geometry of the fiber having a circular profile, it is also possible to use fiber having the first fiber and the second fiber arranged side by side, such that the first fiber and the second fiber form a portion of the outer shell. The ratio of the first fiber to the second fiber may be about 80:20 to 20:80, 70:30 to 30:70, 60:40 to 40:60, or about 50:50.

The man-made fiber is included to lower bulk density of the overall fiber mixture 28. In addition, the man-man fiber provides additional structure to the natural fiber portion such that the hydroponic growing medium resists compression and pot shrinkage. As a result, the hydroponic growing medium maintains its structure throughout an extended grow period of 10-12 months or beyond, the hydroponic growing medium remains to be highly oxygenated by not collapsing on itself due to compromised structure as the organic components break down over time. The man-made fiber portion thus ensures that, unlike other hydroponic growing media containing an organic component which suffer from the organic portion degradation over time, the disclosed hydroponic growing medium remains stable and oxygenated throughout the entire grow period. The inclusion of the man-made fiber prevents reduction in porosity caused by the presence of the organic matter within the hydroponic growing medium.

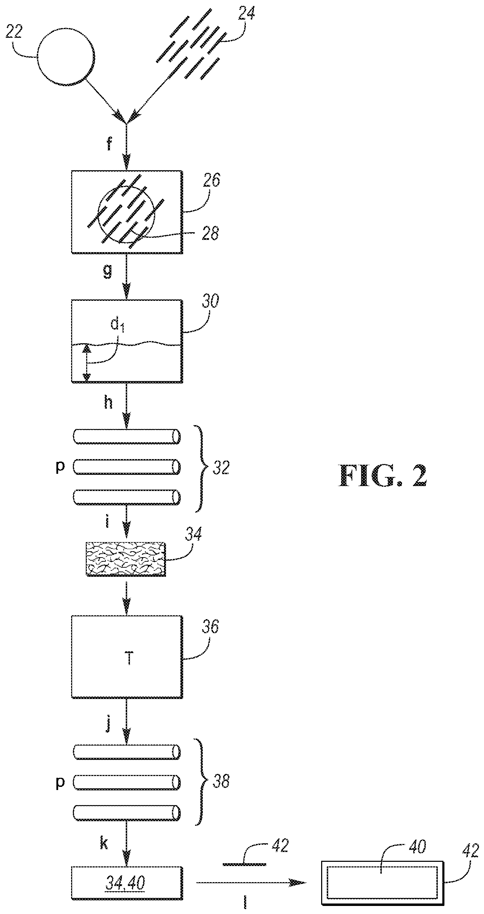

With reference to Figure 2, in step f), the expanded natural fiber portion 22 and the expanded man-made fiber portion 24 are combined. Combination of the expanded natural fiber portion 22 and the expanded man-made fiber portion 24 may be conducted on a conveyor belt leading to a pin mixer 26 or directly in the pin mixer 26 to form a fiber mixture 28.

The fiber mixture 28 may include at least about 2 to 30 wt.%, 5 to 20 wt.%, or 10 to 15 wt.% of the man-made fiber portion, based on the total weight of the fiber mixture 28. The fiber mixture 28 may include about 0.5, 1, 1.5, 2, 2.5, 3, 3.5, 4, 4.5, 5, 6, 7, 8, 9, 10, 11, 12, 13, 14, 15, 16, 17, 18, 19, 20, 21, 22, 23, 24, 25, 26, 27, 28, 29, or 30 wt. % of the man-made fiber portion, based on the total weight of the fiber mixture 28. The fiber mixture 28 may thus include at least about 70 to 98 wt.%, 80 to 95 wt.%, or 85 to 90 wt.% of the natural fiber portion, based on the total weight of the fiber mixture 28. The fiber mixture 28 may include about 99.5, 99, 98.5, 98, 97.5, 97, 96.5, 96, 95.5, 95, 94, 93, 92, 91, 90, 89, 88, 87, 86, 85, 84, 83, 82, 81, 80, 79, 78,77, 76, 75, 74, 73, 72, 71, or 70 wt. % of the natural fiber portion, based on the total weight of the fiber mixture 28. As was stated above, the finer the denier of the man-made fiber, the lower weight percentage of the man-made fiber may be incorporated. For example, about 2 weight % bicomponent fiber having denier of about 4 may be combined with about 98 weight % of the natural fiber portion.

To further assist with bonding of the man-made fiber and the natural fiber, one or more types of chemical binders may be included. Chemical binders may include those named above and may include natural binders, synthetic binders, or a combination of binders.

During step f), the bulk density of the fiber mixture 28 in the pin mixer 26 reaches values of about about 9,61108 to 24,0277 kg/m3, 12,8148 to 19,2222 kg/m3, 16,0185 to 17,6203 kg/m3 or about 9,61108, 11,2129, 12,8148, 14,4166, 16,0185, 17,6203, 19,2222, 20,824, 22,4258, 24,0277 kg/m3 (respectively 0.6 to 1.5 lb/ft³, 0.8 to 1.2 lb/ft³, or 1 to 1.1 lb/ft³ or about 0.6, 0.7, 0.8, 0.9, 1, 1.1, 1.2, 1.3, 1.4, 1.5 lb/ft³). As is apparent from these values, the inclusion of the man-made fiber portion 24 significantly reduces the bulk density of the overall fiber mixture 28. The fiber mixture 28 may be used to grow terrestrial plants without further processing.

Yet, it is desirable to form the fiber mixture 28 into a hydroponic growing medium in the form of a slab, block, cube, or another shape suitable for hydroponic growing and convenient for transportation to a distributor or consumer. The process incorporates heat and/or pressure to bind the natural fiber portion 22 and the man-made fiber portion 24 into a block 40 of similar or different dimensions than the prior art slabs such as rockwool slabs.

Thus, in step g), a metered volume of the fiber mixture 28 is transported to a separator condenser 30. The transport may be arranged via air lift of the fiber mixture 28 to an air/material separator condenser 30. The fiber mixture 28 continues onto a conveyor belt, where the fiber mixture 28 accumulates until a metered volume accumulates within a predefined space. For example, the accumulated volume may reach a depth or thickness *d*₁ of about 127mm to 508mm, 254mm to 457,2mm, or 304,8mm to 381mm (respectively about 5 to 20, 10 to 18, or 12 to 15 inches). The depth may vary depending on the dimensions of the desired product.

In step h), the metered volume is passed through a series of rollers 32 which compress the loose metered volume to a predetermined compressed thickness *d*₂ being 30 to 90%, 40 to 80%, or 50 to 70% lower than *d₁. d₂* is about 1 to 6, 2 to 5, or 3 to 4 inches thick, defining a compressed matrix 34 having a shape resembling a slab. The compressed matrix 34 has a thickness which is about 100 to 500%, 200 to 400%, or 300 to 350% of the original thickness of the loose metered volume. For example, the loose metered volume may have thickness of about 12 inches at the end of step j). After passing through the rollers 32, the compressed matrix 34 may have thickness of about 3 inches (400%) or 4 inches (300%).

Subsequently, in step i), the compressed matrix 34 advances to an oven 36 to bind the natural fiber portion 22 and the man-made fiber portion 24 to form intimate bonds between the two types of fibers. The oven temperature is set to a temperature which has a value of at least the melting temperature of the outer shell of the man-made fiber or the low-melt component of the man-made fiber with the lowest melting point such as the outer shell of the man-made fiber. For example, when the man-made fiber is a bicomponent fiber including a low-melt first fiber (first material), the oven should be set at least at the temperature which equals the melting point of the low-melt first fiber. The temperature will cause melting of the first fiber while the second fiber (second material, such as the material of the core) will remain in its non-melted state. The natural and man-made fibers are adhered together while the man-made fiber portion 24 retains its structure and provides support for the natural fiber portion 22.

The oven may be enclosed or open which will determine the duration of the step i). For example, if the matrix material 34 is within a four-sided mold in the oven, step i) may last several minutes such as about 5 to 20 minutes, 7 to 15 minutes, or 9 to 10 minutes. If the matrix 34 is not placed within a mold such that the hot air may pass through the matrix 34, the step i) may take less time such as 2 to 5 minutes.

Binding of the natural fiber portion 22 and the man-made fiber portion 24 may be performed using dielectric heating, electronic heating, RF (radio frequency) heating, or highfrequency heating. The dielectric heating used may utilize microwaves. Microwaves are a form of electromagnetic radiation with wavelengths ranging from one meter to one millimeter; with frequencies between 300 MHz (100 cm) and 300 GHz (0.1 cm). For example, one or more microwave ovens may be used in step i) and/or other steps of the process described herein. The one or more microwave oven(s) may use a frequency from about 2.45 GHz (wavelength of 12.2 cm) to about 915_MHz (wavelength of 32.8 cm) or 433.92 MHz. Other frequencies and wavelengths are contemplated. The microwave oven(s)_may be a microwave tunnel oven featuring an elongated body. The microwave oven(s) may be a microwave dryer. The microwave oven may include one or more portions.

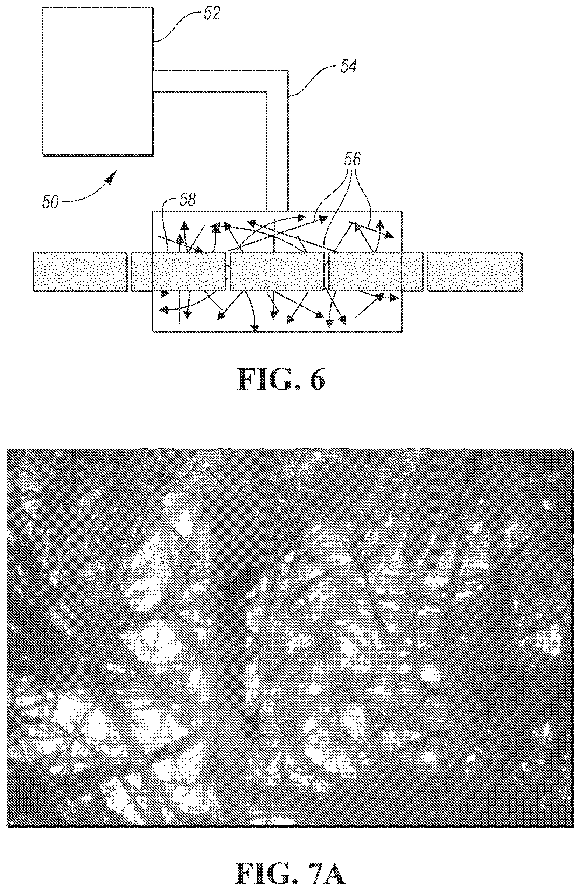

A nonlimiting schematic example of a microwave oven is depicted in Figure 6. The microwave oven 50 may include a generator 52, a waveguide 54, and an applicator 56. The generator 52 generates energy at the frequencies mentioned above such as 915 MHz or 2450 MHz. The generator 52 may include a magnetron, electromagnet, a power supply unit, circulator, a water load, which may be housed in an enclosure. The enclosure may be mounted to a hard surface such as a floor. A flow of water may be used for cooling of the generator 52.

The waveguide 54 conveys microwave energy from the generator 52 to the applicator 56. The waveguide 54 may have a plurality of interconnected portions. The waveguide 54 allows the generator 52 to be located in a separate area away from the applicator 56, at a distance of up to about 30 m (100 feet). The waveguide 54 may include one or more manual tubing stubs allowing an operator to optimize microwave energy absorption of the fiber, dependent on the fibers' dielectric properties and temperature.

The microwave oven may be controlled manually or automatically. If operated automatically, the microwave oven 52 may include a control system (not depicted) capable of adjusting one or more variables such as generator power output, reflected power, fiber exit temperature, a combination thereof, or the like. The control system may include one or more programmable logic controllers (PLC)s, screen control panels, devices for data acquisition, power monitoring, temperature monitoring, moisture monitoring, and the like. The control system may further include one or more alarm features capable of identifying, recording, and/or assisting in resolution of one or more process control issues.

The applicator 56 contains and distributes the microwave energy around the material passing through the applicator 56. The fiber material may be moving via the applicator 56 on a conveyor belt 58, which may assist in uniform movement of the material via the applicator 56. The conveyor belt 58 may have a preset or variable speed control. The applicator 56 may be a multimode device. The applicator 56 may have a variety of shapes. For example, the applicator 56 may be elongated. The applicator 56 may be shaped like a tunnel, a hollow conduit, or recess. The applicator 56 may or may not include one or more exhaust fans to accommodate a predetermined desired level of material drying or dehydration.

Thus, the natural fiber portion 22 and the man-made fiber portion 24 may be heated and/or bound in the applicator 56 while passing through the applicator 56, for example on a conveyor belt 58. The fibers may thus efficiently absorb the microwave energy to achieve the desired final temperature and moisture content discussed in this application as well as become stable, and/or sterile.

The above-described process may utilize about 1 -10 pcf, 2-8 pcf, or 4-6 pcf of a blend of the natural fiber portion 22 and the man-made fiber portion 24. The process may also use about 5 -125 kW, 10 - 100 kW, or 15 to 75 kW of power. The process may utilize about 300 MHz to 6000 MHz operating frequencies besides those named above such as 915 MHz. Depending on the dimensions of the microwave oven, amount, density, moisture content and other properties of the fiber passing through, the blend of fibers 22 and 24 may pass through the microwave oven in about 1 - 10 minutes, 2-8 minutes, or 3 - 6 minutes.

An additional heat source may be used in conjunction with the microwave oven. The additional heat source may also utilize dielectric heating. The heating in step i) may be rapid and/or uniform. Dielectric heating may be used in any other step of the process described herein requiring elevated temperatures.

Step j) follows immediately after the first fiber melts such that a series of rollers 38 applies pressure to the compressed matrix 34 which is now at least partially melted due to the melt of the outer shell material. The rollers 38 may have the same or different dimensions. The rollers 38 may be smooth or include less then smooth texture. At least some of the rollers 38 may be heated during the step j). The pressure from the series of rollers 38 allows the matrix 34 to further bond the man-made fiber to the natural fiber within the compressed matrix 34, and to hold its structure. Compression applied by the rollers 38 may be about 2.5 to 3.5 times the original bulk density of the fiber mixture 28 from step f).

The compressed matrix 34 may be cooled before the pressure from the rollers 38 is released. The cooling may be provided by exposure to ambient air having approximately room temperature of about 18 deg.C (64 deg.F) to about 21deg.C (70 deg.F) or by passing cool air over the matrix 34 in the rollers 38.

After cooling, in step k), the compressed matrix 34 of the hydroponic growing medium 39 retains its structure, forming a 3-dimensional hydroponic growing medium slab, cultivation slab, structure, or substrate 40, which may be used for horticultural applications such as growing fruit, herbs, and/or vegetables in climate controlled environments The term slab generally relates to the shape of the hydroponic growing medium substrate. The slab may have a generally rectangular shape. Yet, the slab may have any other shape such as square, polygon, circle, oval, or the like. The slab is three-dimensional.

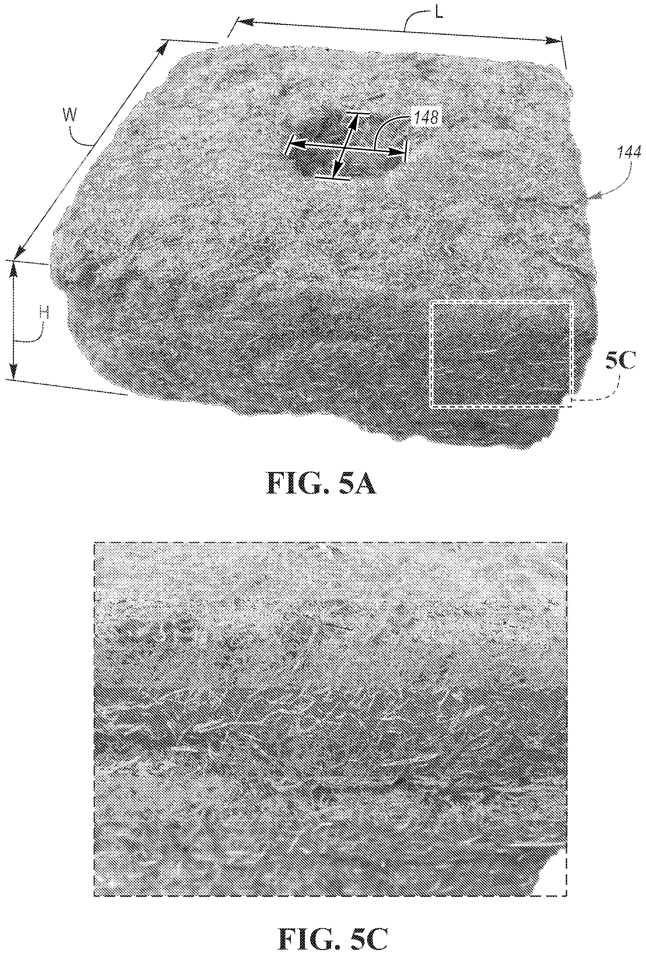

In step 1), the slab 40 is placed in a packaging, covering, sheath, or bag 42 to reduce drying of the growing medium when used in a greenhouse, forming a slab 44. A plurality of slabs 44 may be accumulated and pelletized for shipment to consumers. Yet, the hydroponic growing substrate retains its structure and/or configuration even when no bag is included, as can be seen in Figures 5A-5C. The hydroponic growing medium may be further compressed, for example by a grower inserting a propagation cube, a plant, or seeds in the substrate, and the substrate will retain its shape and return to its pre-compression state after the pressure is released. The hydroponic growing medium disclosed herein may thus be a self-supporting structure, capable of holding its shape and/or structure without an additional aid. The bag 42 may be loose and opened on at least one side. Alternatively, the bag 42 may be a sealed bag, enclosing the slab 44 within the bag 42. In at least one embodiment, the slab 44 may be enclosed by the bag 42 on less than all sides. For example, the slab 44 may be attached to a plastic sheath only on its bottom side, one or more of the sides, or have the plastic sheath placed only on top. Alternatively still, the slab 44 may be loosely placed in a bag for transportation but used for hydroponic purposes without the bag coverage.

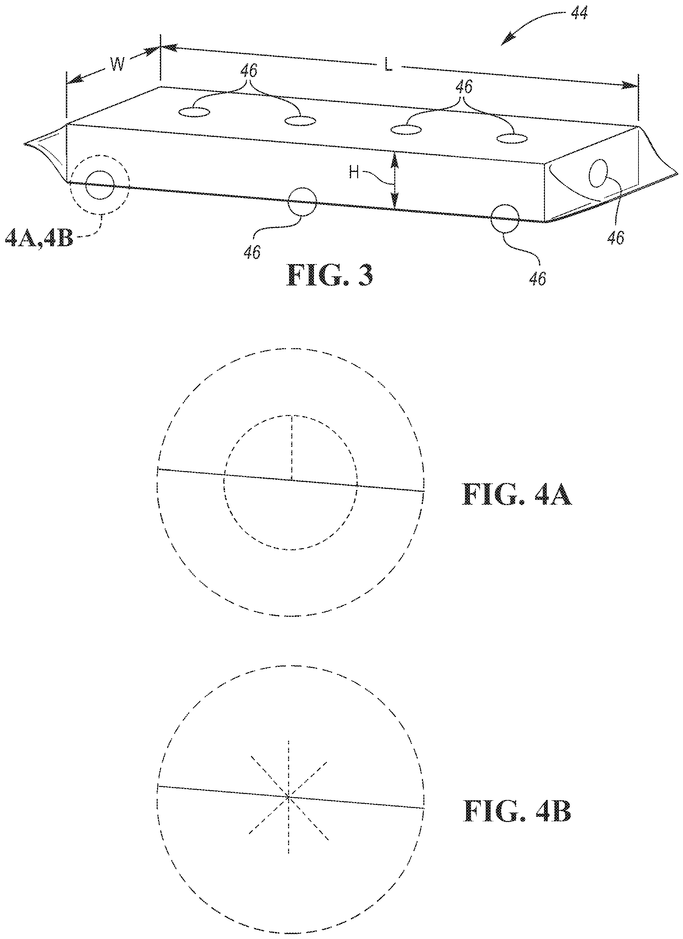

An example of the slab 44 can be seen in Figure 3. The slab may have varying dimensions. Each slab may have consistent or varying dimensions, depending on the needs of a specific application. Example dimensions may include a width w of about 6 (15.24 cm) to 8 inches (20.32 cm) to 12 inches (30.48 cm), length I of about 36 (91.44 cm) to 40 inches (101.6 cm) to 78.7 inches (200 cm), and a height *h* of about 3 (7.62 cm) to 4 inches (10.16 cm). Dimensions such as height may be uniform throughout the length of the bag 44. Alternatively, certain portions of the bag 4 may have a smaller height than the remaining portions. For example, one or more portions around the corners may have a smaller height than the remaining portions.

Another example may be one or more portions which are designed to house the plant itself such that one or more areas for this purpose are imprinted in the slab, the area having a smaller height than the surrounding areas by up to about 50%. Such an area or portion may form a cavity, a hollowed-out space, an unfilled space or a hole within the mass of the hydroponic growing medium. The cavity may be defined as a cut-out or a recess in the body of the hydroponic growing substrate structure. The cavity may have a length which equals a height of the slab. Alternatively, the cavity or recess may be shallower than a height of the slab. The cavity may reach a certain depth *di* of about 5, 10, 15, 20, 25, 30, 45, 50, 55 % of the slab's height. An example cavity 148 may be seen in Figures 5A-5C. Example non-limiting dimensions of the cavity or recess may include a diameter of about 1 - 20 cm, 2-15 cm, or 5 - 10 cm and a depth of about 2 - 20 cm, 5-15 cm, or 7 -10 cm. Furthermore, the areas which are meant to accommodate majority of the root volume may have an increased height in comparison to the average height of the slab by about up to 25%.

The cavity may have varying dimensions and/or shapes and may be large enough to accommodate a propagation or grow portion. The propagation portion is designed to enable seedlings to sprout within the propagation portion. The entire propagation portion may be later incorporated into the slab, for example inserted into the cavity, when the plant is ready to root in a larger root zone.

A slab may include one or more cavities. The cavities may have the same or different dimensions and/or shape. A configuration of the cavities may differ or be the same in a plurality of slabs and may be regular, irregular, symmetrical, asymmetrical.

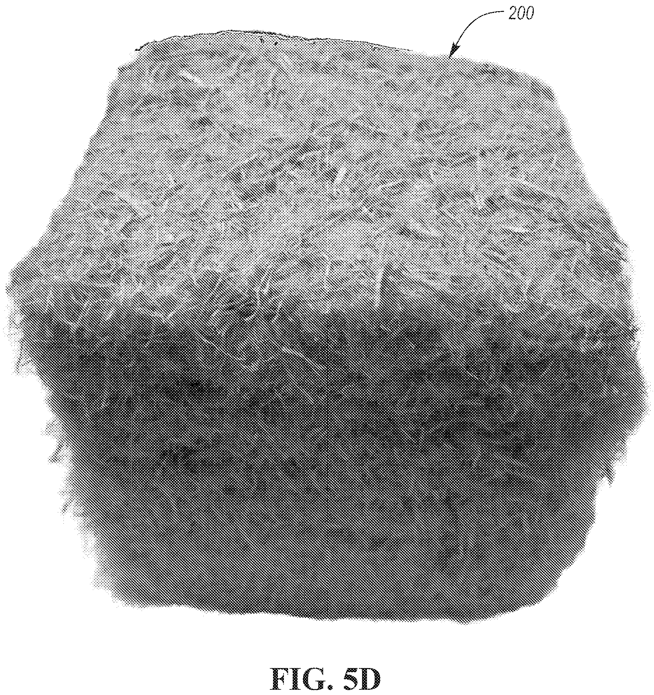

The propagation portion may be a cube or may have a different shape such as having a circular, rectangular, oval, polygonal, regular, irregular, symmetrical, or asymmetrical crosssection. The propagation portion may have various dimensions and shapes, for example 25,4mm x 25,4mm x 25,4mm, 50,8mm x 50,8mm x 50,8mm, 101,6mm x 101,6mm x 101,6mm, 152,4mm x 152,4mm x 152,4mm (respectively for example 1 x 1 x 1 inch, 2 x 2 x 2 inches, 4 x 4 x 4 inches, 6 x 6 x 6 inches). The propagation portion may include a cavity in a top side of the propagation portion to accommodate one or more seeds. The cavity may be located in the center of the top side of the propagation portion. A non-limiting example of a propagation portion is a propagation cube 200 depicted in Figure 5D.

The propagation portion may be made according to the process described above and include materials described herein. Yet, the preparation portion may differ in at least one biological, physical, chemical, and/or bio-physical property described herein from the hydroponic growing medium forming a slab. Such property may be dry bulk density, volumetric water content, percent of air space, total porosity, or the like.

For example, the propagation portion may have dry bulk density which may be 10, 15, 20, 25, 30, 35, 40, 45, 50, 55, or 60 % higher than dry bulk density of the slab. The greater density of the propagation portion may have the advantage of accommodating specific needs of a seed or a seedling such as higher demand for water. The propagation portion may have an increased water retention as a result of the increased dry bulk density.

Alternatively, the formed slabs may be cut into smaller configurations to form the propagation portions. Cutting may be provided by laser or other cutting means. Depending on the final dimensions of the slab 44, a number of apertures 46 may be formed in the bag 42. Alternatively, the bag 44 may contain weakened areas 46 such as perforated portions, where apertures 46 may be created by a consumer. The apertures 46 may serve for draining of excess hydroponic liquid to be supplied to a growing plant. Alternatively, at least some of the apertures 46 may serve for placement of the plant(s) within the hydroponic growing medium arranged within the bag 44. Such apertures 46 may be placed above the portions of the slab with lower thickness, each such portion forming a recess, depression, dent, indentation, or cavity, which is ready to accommodate the plant and/or a propagation cube.

The bag 42 may be made from plastic such as thermoplastics named above. Alternatively, the bag 42 may be made from natural materials capable of lasting in an undisintegrated state for the length of the growing season or beyond such as 10 to 12 months or longer. Such material may include woven fiber of the types named above, possibly in combination with a thin biodegradable plastic foil liner. Using such material would even further increase environmental friendliness of the disclosed hydroponic growing medium due to an ecological disposal of the disclosed hydroponics growing medium slab in its entirety.

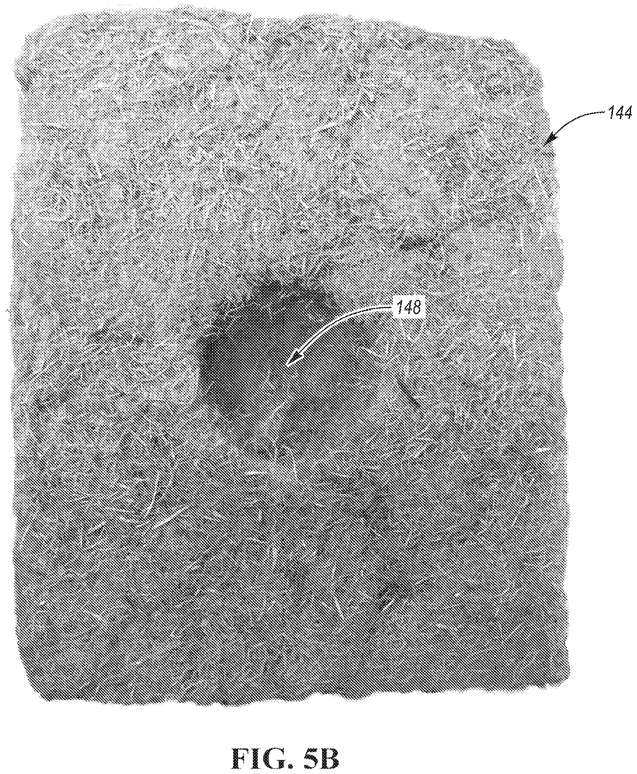

An example of the hydroponic growing medium 39 slab 144 is depicted in Figures 5A-5C. A perspective side view of the slab 144 is captured in Figure 5A. The top view of the slab 144 is shown in Figure 5C. The slab 144 includes a recess 148 to accommodate a propagation portion such as propagation cube or a plant. The recess 148 is central to the rectangular-shaped slab 144. The non-limiting example dimensions of the slab 144 are 10 cm x 22 cm x 18 cm. The depth *dp* of the recess is about 5 cm. Figure 5B shows a detailed view of the slab 144 and its fibrous structure.

The bulk density of the hydroponic growing medium slab is lower than density of other hydroponic media such as the rockwool slab or growing media used for other than hydroponic purposes. For example, bulk density of the disclosed hydroponic medium may be lower than : 88,1015 kg/m³, lower than 86,4997kg/m³, lower than 84,8979 kg/m³, lower than 83,296 kg/m³, lower than 81,6942 kg/m³, lower than 80,0923 kg/m³, lower than 76,8886 kg/m³, lower than 73,6849kg/m³, lower than 72,0831 kg/m³, lower than 70,4812 kg/m³, lower than 67,2775 kg/m³, lower than 64,0739 kg/m³, lower than 60,8702 kg/m³, lower than 56,0646 kg/m³, lower than 51,2591 kg/m³, lower than 48,0554 kg/m³, lower than 44,8517 kg/m³, lower than 40,0462 kg/m³, lower than 32,0369 km/m³ (respectively lower than 5.5 lb/ft³, lower than 5.4 lb/ft³, lower than 5.3 lb/ft³, lower than 5.2 lb/ft³, lower than 5.1 lb/ft³, lower than 5.0 lb/ft³, lower than 4.8 lb/ft³, lower than 4.6 lb/ft³, lower than 4.5 lb/ft³, lower than 4.4 lb/ft³, lower than 4.2 lb/ft³, lower than 4.0 lb/ft³, lower than 3.8 lb/ft³, lower than 3.5 lb/ft³, lower than 3.2 lb/ft³, lower than 3.0 lb/ft³, lower than 2.8 lb/ft³, lower than 2.5 lb/ft³, lower than 2.0 lb/ft³).
The bulk density of the disclosed hydroponic medium may be about 24,0277kg/m³, 28,8332kg/m³, 30,4351kg/m³, 32,0369kg/m³, 33,6388kg/m³, 35,2406kg/m³, 36,8425kg/m³, 38,4443kg/m³, 40,0462kg/m³, 41,648kg/m³, 43,2499kg/m³, 44,8517kg/m³, 46,4535kg/m³, 48,0554kg/m³, 49,6572kg/m³, 51,2591kg/m³, 52,8609kg/m³, 54,4628kg/m³, 56,0646kg/m³, 57,6665kg/m³, 59,2683kg/m³, 60,8702kg/m³, 62,472kg/m³, 64,0739kg/m³, 65,6757kg/m³, 72,0831kg/m³, 76,8886kg/m³, 80,0923kg/m³, 83,296kg/m³, 104.1200kg/m³, 108.9255kg/m³, 112.1292kg/m³, 115.3329kg/m³, 120.1384kg/m³, 123.3421kg/m³, 128.1477kg/m³, 131.3513kg/m³, 136.1569kg/m³, 139.3606kg/m³, 144.1661kg/m³, 147.3698kg/m³, 152.1754kg/m³, 155.3790kg/m³, 160.1846kg/m³, 163.3883kg/m³, 168.1938kg/m³, 171.3975kg/m³, 176.2030kg/m³, 179.4067kg/m³, 184.2123kg/m³, 187.4160kg/m³, 192.2215kg/m³, 200.2307kg/m³, 208.2400kg/m³, 216.2492kg/m³, 224.2584kg/m³, 232.2677kg/m3, 88.10154kg/m³, 91.30524kg/m³, 94.50893kg/m³, 96.11078kg/m³, 99.31447km/m³, (respectively about 1.5 to 15, 1.8 to 10, 2 to 5, or 2.2 to 3.0 lb/ft³. The bulk density of the disclosed hydroponic medium may be about 1.5, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.5, 4.8, 5.0, 5.2, 5.5, 5.7, 5.9, 6.0, 6.2, 6.5, 6.8, 7.0, 7.2, 7.5, 7.7, 8.0, 8.2, 8.5, 8.7, 9.0, 9.2, 9.5, 9.7, 10.0, 10.2, 10.5, 10.7, 11.0, 11.2, 11.5, 11.7, 12.0 12.5, 13.0, 13.5, 14.0, 14.5, 15.0 lb/ft³). The dry bulk density of the disclosed hydroponic medium may be 15.0 lb/ft³ or lower, 14.0 lb/ft³ or lower, 13.0 lb/ft³ or lower, 12.0 lb/ft³ or lower, 11.0 lb/ft³ or lower, 10.0 lb/ft³ or lower, 9.0 lb/ft³ or lower, 8.0 lb/ft³ or lower, 7.0 lb/ft³ or lower, 6.0 lb/ft³ or lower, 5.0 lb/ft³ or lower, 4.0 lb/ft³ or lower, 3.8 lb/ft³ or lower, 3.6 lb/ft³ or lower, 3.4 lb/ft³ or lower, 3.2 lb/ft³ or lower, 3.0 lb/ft³ or lower, 2.8 lb/ft³ or lower, 2.6 lb/ft³ or lower, 2.4 lb/ft³ or lower, 2.2 lb/ft³ or lower, 2.0 lb/ft³ or lower.

Total porosity of the hydroponic growing medium may be about 85 to 99 volume %, 90 to 97 volume %, or 92 to 95 volume %. Total porosity of the hydroponic growing medium may be greater than about 85, 85.5, 86, 86.5, 87, 87.5, 88, 88.5, 89, 89.5, 90, 90.5, 91, 91.5, 92, 92.5, 93, 93.5, 94, 94.5, 95, 95.5, 96, 96.5, 97, 97.5, 98, 98.5, or 99 volume %.

Comparison of various properties of an example hydroponic growing medium slab, a rockwool slab, and a non-hydroponic growing medium are listed in Table 5 below. The WHC in Table 5 has been determined by modified ASTM D7367 - Standard Test Method for Determining WHC of Fiber Mulches for Hydraulic Planting. The density was measured as weight of the slab divided by volume of the slab.

**Table 5 - Comparison of physical properties of various hydroponic and non-hydroponic substrates.**

| **Type of substrate** | **Hydroponic use** | **WHC [wt. %]** | **Density [lb/ft³]** | **Loss of Ignition [%]** |
|---|---|---|---|---|
| Hydroponic growing medium slab | Yes | 600 ± 50 | 2.8 ± 0.6 | 99.7 ± 0.3 |
| Rockwool slab | Yes | 1834 ± 100 | 5.7 ± 0.3 | 10 ± 0.5 |
| Non-hydroponic growing medium mat | No | 911 ± 50 | 7 ± 0.3 | 99.7 ± 0.3 |

As Table 5 illustrates, the disclosed hydroponic growing medium slab has a significantly reduced density compared to the rockwool slab and to the non-hydroponic growing medium. The reduced density achieved by the process described above incorporating sets of rollers and thermal treatment ensures sufficiently strong structure which enables proper support of the plants throughout the extended growing season. The lower density also supports a root structure having a robust root system including numerous very thin roots. The intricate root system has thinner roots divided into thin and fine roots resembling hair. The fine fibrous system is thus enabled to absorb more nutrients via its many endings. In comparison, substrates with density which exceeds the values provided for the hydroponic growing medium slab result in a growth of thicker roots which are less efficient in absorption of nutrients from the hydroponic liquid.

The WHC of the hydroponic growing medium slab presents another advantage. The hydroponic growing medium slab has ability to provide sufficient pore space, oxygenation, and ability to percolate the hydroponic liquid via the root system and the slab. Higher values of WHC, such as WHC associated with the rockwool slab, translate into prolonged retention of water within the slab, reduced oxygenation of the slab and root system, and eventually an increased chance for development of undesirable plant diseases and parasites or fungi such as Pythium.

The container capacity or total WHC of the hydroponic growing medium may be about 40 - 80, 50 - 75, or 60 - 65 wt. %. The container capacity may be lower than about 80, 75, 70, 65, 60, 55, or 50 wt. %. The container capacity may be from about 40, 45, 50, 55, 60, 65, 70, 75, 80, or 85 to 85, 80, 75, 70, 65, 60, 55, 50, 45 to 40 wt. %.

The percent of air space of the hydroponic growing medium may be about 30 to 60, 40 to 55, or 50 to 53. The percent of air space may be 30, 31, 32, 33, 34, 35, 36, 37, 38, 39, 40, 41, 42, 43, 44, 45, 46, 47, 48, 49, 50, 51, 52, 53, 54, 55, 56, 57, 58, or 60.

The volumetric water content of the hydroponic growing medium at pF 0.5 may be about 50 to 70 %, 55 to 65 %, or 60 to 63 %. The volumetric water content of the hydroponic growing medium at pF 1 may be about 50, 51, 52, 53, 54, 55, 56, 57, 58, 60, 61, 62, 63, 64, 65, 66, 67, 68, 69, or 70 %. The volumetric water content of the hydroponic growing medium at pF 0.5 may be lower than 95, 92, 90, 88, 85, 82, 80, 78, 75, 72, 70, 67, 65, 62, 60, 58, 55, 50, or 45 %.

The volumetric water content of the hydroponic growing medium at pF 1 may be about 25 to 70 %, 30 to 60 %, or 40 to 50 %. The volumetric water content of the hydroponic growing medium at pF 1 may be about 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 60, 61, 62, 63, 64, 65, 66, 67, 68, 69, or 70 %. The volumetric water content of the hydroponic growing medium at pF 1 may be lower than 80, 78, 75, 72, 70, 67, 65, 62, 60, 58, 55, 52, 50, 48, 45, 42, 40, 38, 35, or 32 %.

The volumetric water oxygen of the hydroponic growing medium at pF 0.5 may be about 15 to 50 %, 20 to 40 %, or 30 to 35 %. The volumetric water content of the hydroponic growing medium at pF 1 may be about 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50%. The volumetric water oxygen of the hydroponic growing medium at pF 0.5 may be higher than 5, 7, 10, 12, 15, 18, 20, 22, 25, 28, 30, 32, 33, 34 %.

The volumetric water oxygen of the hydroponic growing medium at pF 1 may be about 50 to 80 %, 60 to 75 %, or 65 to 70 %. The volumetric water content of the hydroponic growing medium at pF 1 may be about 50, 51, 52, 53, 54, 55, 56, 57, 58, 60, 61, 62, 63, 64, 65, 66, 67, 68, 69, 70, 71, 72, 73, 74, 75, 76, 77, 78, 79, or 80 %. The volumetric water oxygen of the hydroponic growing medium at pF 1 may be higher than 15, 20, 25, 30, 35, 40, 45, 50, 55, 60, 65, or 70 %.

As is further illustrated in Figures 7A-9B, the available pore space in the herein-disclosed hydroponic growing medium differs from that of rockwool. Figures 7A-9B show a non-limiting example of the hydroponic growing medium of the present disclosure and the rockwool slab of comparable thickness at various magnifications. Figures with designation "A" refer to the hydroponic growing medium, the figures with designation "B" depict rockwool at the same magnification as a respective "A" figure.

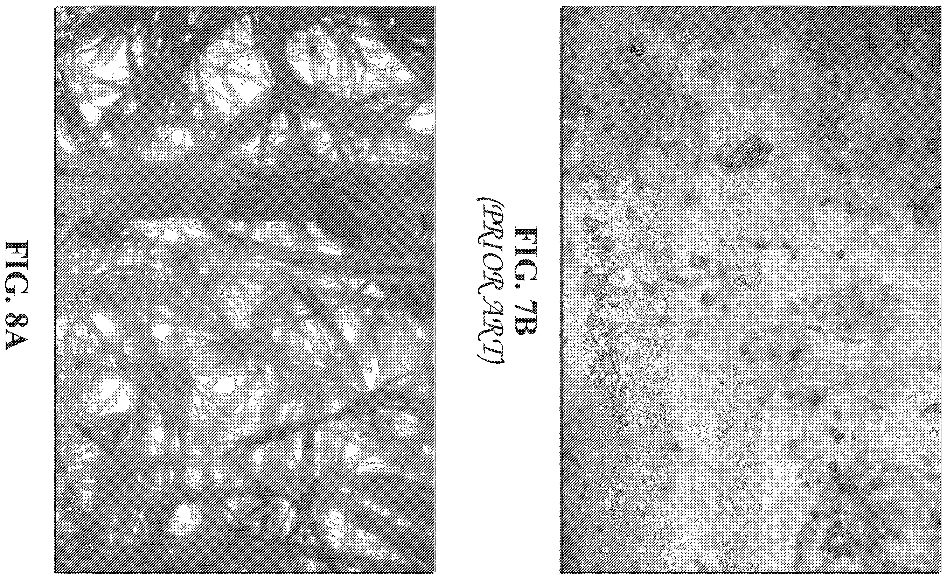

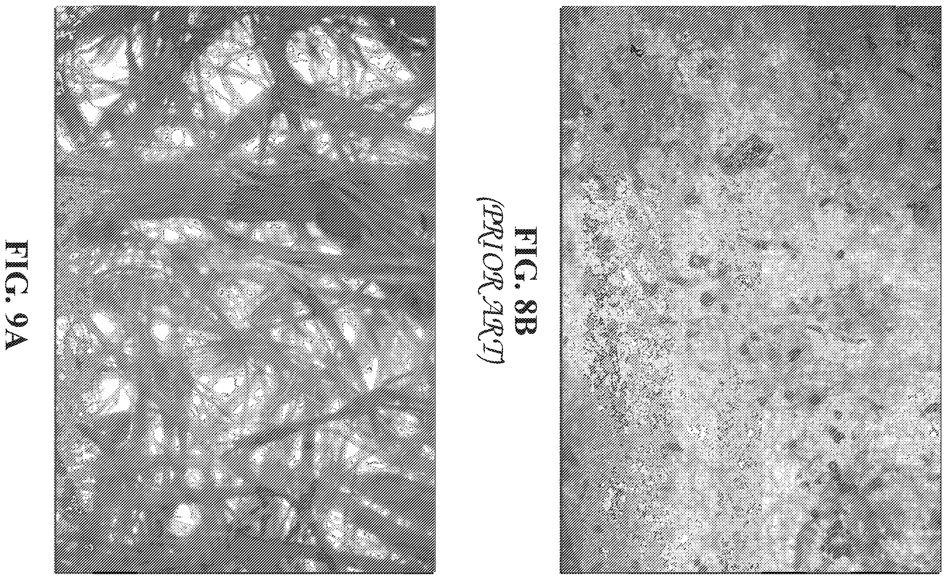

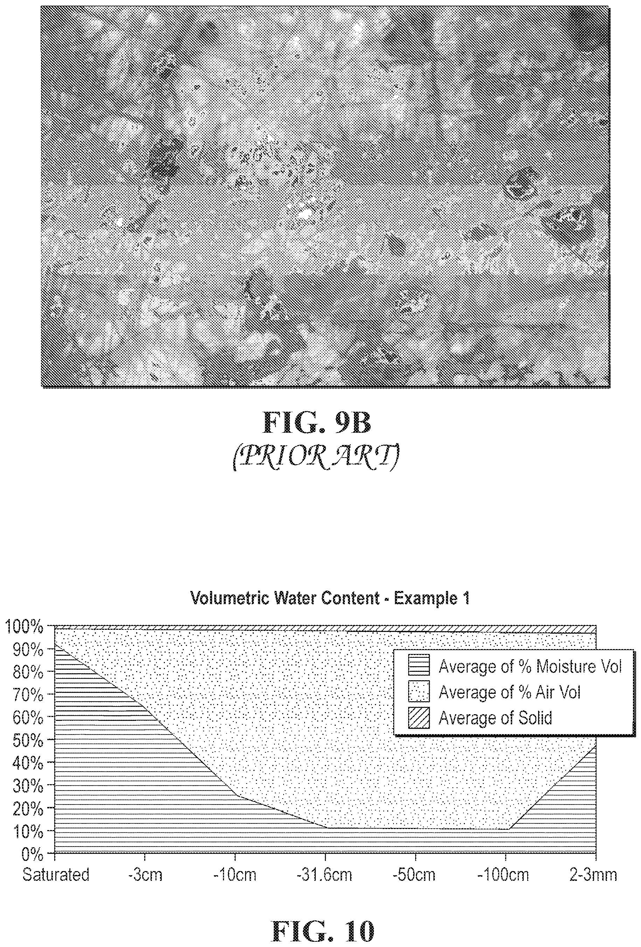

In Figures 7A and 7B, both the herein-disclosed hydroponic growing medium (Fig. 7A) and rockwool (Fig. 7B) have been magnified 11.25 times; in Figures 8A and 8B, magnification was 20 times, and in Figures 9A and 9B, magnification was 50 times. The hydroponic growing medium shows a combination of the natural fibers and man-made fibers, together forming a fibrous structure featuring rich pore space, available for plant growth. In comparison, the rockwool's (Fig. 7B) pore space is limited and fibers are thinner.

In addition to the limited pore space and thinner fiber, the rockwool slab features waste material in the form of glass nodules, well-visible in Figures 7B, 8B, and 9B as black clusters. The glass nodules are a non-fibrous material, representing non-spun rockwool. The nodules take up valuable space within the slab. Since the nodules have no pores, they do not enable root growth in the area of the nodules. As a result, the rockwool slab contains waste material which is not suitable for root establishment and plant growth.

In contrast, the hydroponic growing medium features a completely fibrous structure with no glass nodules or similar waste material which would occupy valuable space available for the root system. The disclosed hydroponic growing medium is free of any waste material, glass nodules, chunks, non-fibrous material, or other material blocking or preventing plant roots from growing through the hydroponic growing medium.

The advantage of the disclosed hydroponic growing medium slab also lies in the ability to recycle the hydroponic liquid as the fibrous system is free of soil or materials which would devaluate chemistry of the hydroponic liquid or change its color as the liquid advances through the slab. The hydroponic liquid remains clear after percolation via the hydroponic growing medium slab. This is in sharp contrast to other substrates such as coco slabs or coco grow bags, which contain tannins that impart color to the hydroponic liquid and render it unsuitable for recycling.

A further advantage of the hydroponic growing medium slab is high loss of ignition. The disclosed hydroponic growing medium slab may be burned, for example at the end of the extended growing season and/or at the end of the plant life. The burnt hydroponic growing medium slab may be thus used as a fuel in a bio-furnace, for example to generate heat for greenhouses during the cold season. Rockwool, on the other hand, is produced from mineral components, and cannot be burnt. In contrast to rockwool, the hydroponic growing medium slab is thus environmentally disposable.

As was stated above, the man-made fiber is an enabler for providing of the organic portion, the natural fiber portion, within the hydroponic growing medium. An inclusion of the natural fiber portion is vital to the plant growth and characteristics of the fruit and vegetable. For example, certain plants grown in the disclosed hydroponic growing medium have shown increased sweetness by up to about 15 to 20% of the unripe and/or ripe fruit in comparison with the fruit from the same species grown in prior art hydroponic substrates such as rockwool under the same environmental conditions. Without limiting this disclosure to a single theory, it is hypothesized that the presence of the natural fiber portion contributes to the phenomenon since beneficial microorganisms may thrive in the organic matrix in comparison to the inorganic matter.

With respect to quantifying sweetness of fruit of various terrestrial plant species grown in the hydroponic growing medium, various methods may be implemented. As sweetness in many fruits and vegetables is a desirable attribute that is often governed by sugar concentration, the determination and quantification of sugars and sweetness may be assessed in a variety of ways. For example, various indices may be used to characterize sweetness or sugar content of horticultural products. Among the indices, the most commonly measured are the amount of sugars, sugar composition, total soluble solids and soluble solid content, ratio of soluble solids to titratable acidity, BrimA, sweetness index, total sweetness index. One or more of the indices may be assessed by a sensory evaluation, refractometer, hydrometer, electronic tongue, high pressure liquid chromatography, or a combination thereof.

Regardless of which method is used to assess the above-mentioned indices, the fruit grown in the disclosed hydroponic growing medium is consistently evaluated as having higher sweetness than the same fruit grown under the same or comparable conditions and within the same time limit in prior art substrates such as rockwool.

### Examples

### Examples 1-4

Examples 1 and 2 were tested in Porometer and Hyprop tests, described above, to assess total porosity, container water holding total capacity (WHC), percentage of air space, and dry bulk density in comparison to a rockwool slab.

Properties of Examples 1 and 2 are listed in Table 6 below.

**Table 6 - Properties of Examples 1-4 and Comparative Example A**

| **Example No.** | **Natural portion** | **Man-made fiber portion** | |
|---|---|---|---|
| | **Material/Amount [wt. %]** | **Material/Amount [wt. %]** | **Linear mass density of fibers [lb/ft³ / kg/m³]** |
| Example 1 (120 HF slab 3 lb/ft3) | Natural refined pine wood chips fiber/ 96 | Polyester core and polypropylene sheet / 4 | 3 / 48.06 |
| Example 2 (120 HF slab 4 lb/ft3) | Natural refined pine wood chips / 94 | Polyester core and polypropylene sheet / 6 | 4 / 64.07 |
| Example 3 (HF365 slab 85, 4D, 2", low melt) | Natural refined pine wood chips / 92 | Polyester core and polypropylene sheet / 8 | 4 / 64.07? |
| Example 4 (365 HF 3) | Natural refined pine wood chips / 96 | Polyester core and polypropylene sheet / 4 | 3 / 48.06 |
| Example 5 (365 HF 4) | Natural refined pine wood chips / 94 | Polyester core and polypropylene sheet / 6 | 4 / 64.07 |
| Comparative example A - Rockwool slab | Basalt rock, chalk spun, compressed fiber | - | - |

**Table 7 - Various measured properties of Examples 1, 2, and 3 in comparison to a rockwool slab**

| **Material** | **Total porosity [%]** | **Container Capacity - Total WHC [wt. %]** | **% Air Space** | **Dry Bulk Density [lb/ft³ / kg/m³]** |
|---|---|---|---|---|
| Example 1 | 98.71 | 56.06 | 42.65 | 2.73/43.73 |
| Example 2 | 98.52 | 62.11 | 36.40 | 3.53 / 56.55 |
| Example 3 | 98.60 | 48.60 | 50.10 | 3.56/57.03 |
| Comparative example A - Rockwool slab | 94.76 | 89.87 | 4.89 | 3.85/61.67 |

The dry bulk density and % of air space were calculated according to a protocol for preformed material developed by the research station in Naaldwijk, NL (Wever, G. and J.A. Kipp, 1998, Characteristics of the hydrophysical behavior of stonewool. Proc. 16th World Congress of Soil Science, Montpellier, France). The protocol for preformed material has adapted the protocol for dry bulk density of loose materials (EN 13039, 2011) and the protocol for pore density of loose materials (EN 13041, 1999).

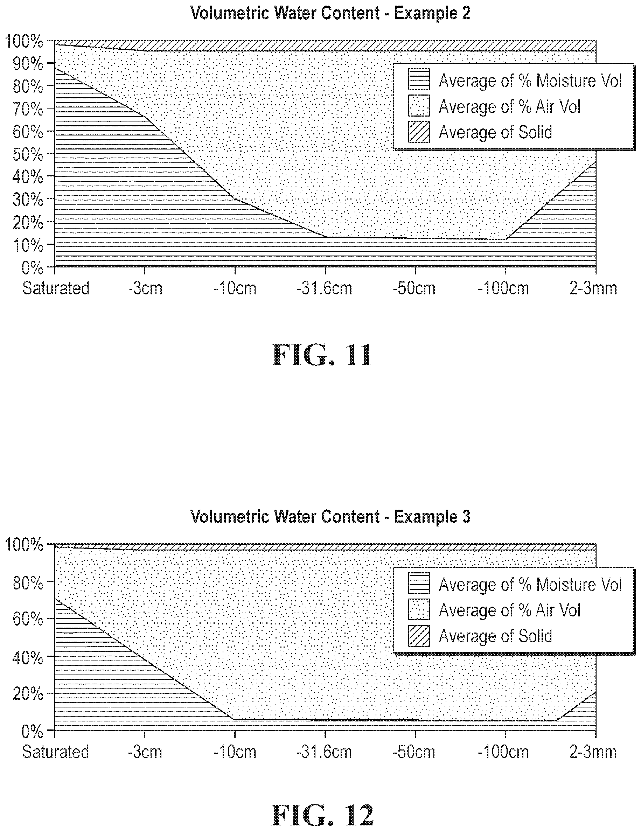

Examples 1, 2, 4, and 5 and Comparative Example A were further evaluated with respect to pF scale, assessing balance of water and air content of the material at different pF values. pF correlates to an amount of energy a plant expenses to grow. Between pF 0.5 and 2, a plant is capable of growing while having enough energy to obtain moisture from a growing material. pF 1 represents the most energetically balanced value. pF thus relates to a suction that is being supplied to a substrate or an amount of suction required to extract a predetermined moisture content. The pF test thus simulates a plant trying to absorb water from a particular substrate. The less pressure measured, the less energy a plant has to expense to draw moisture from a substrate. The test results are captured in Table 8 below and in Figures 10-14.

In Figures 10-14, the value of -3 cm on the x axis corresponds to the value of 0.5 pF; the value of -10 cm on the x axis corresponds to the value of 1.0 pF. It is desirable to provide a hydroponic growing medium having a gradual curve representing a slow release of water between pF 0.5 and pF 1, potentially pF 2. A hydroponic growing medium with a gradual curve may provide a proper balance of water and air in time or a better-balanced water availability to a plant root system, and thus enable more efficient plant establishment as plant roots require oxygen for plant growth.

As can be seen in Table 8 and Figures 10-14, the hydroponic growing medium disclosed herein optimizes oxygen availability. In comparison to the hydroponic growing medium of Examples 1, 2, 4, and 5, Comparative Example A has a very steep curve and retains more than 70% volumetric water content at pF 1. At more than 70% volumetric water content, a plant root system is deprived of oxygen, which negatively impacts the root establishment and plant growth.

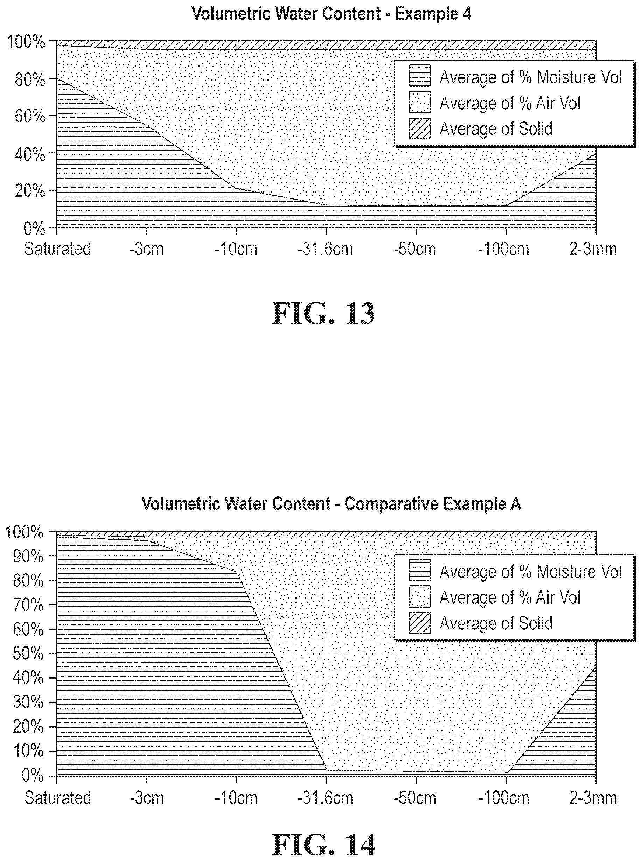

Figures 10-14 further illustrate that the hydroponics growing medium is more oxygenated at lower pressure of pF 1 than the rockwool material of the Comparative Example A (Figure 14), yet provides water even at high pressure (pF 2) while the rockwool slab's ability to provide water drops sharply with increasing pressure.

**Table 8 - Volumetric water content at various pF values for Examples 1, 2, 4, 5, and Comparative Example A**

| | **Volumetric Water Content at pF 0.5 (-3 cm) [average of moisture vol.]** | **Volumetric Water Content at pF 1 (-10 cm) [average of moisture vol.]** | **Volumetric Water Oxygen at pF 0.5 (-3 cm) [average of air vol.]** | **Volumetric Water Oxygen at pF 1 (-10 cm) [average of air vol.]** |
|---|---|---|---|---|
| Example 1 | 70 | 30 | 30 | 70 |
| Example 2 | 70 | 30 | 35 | 65 |
| Example 4 | 58 | 42 | 25 | 75 |
| Example 5 | 60 | 40 | 30 | 70 |
| Comparative example A - Rockwool slab | 97 | 80 | 3 | 15 |

### Examples 6-11

Examples 6-11 were tested in a pepper growth trial. The properties of Examples 6-11 and Comparative Examples B and C are listed in Table 9 below.

**Table 9 - Properties of Examples 6-11 and Comparative Examples B and C**

| **Example No.** | **Natural portion** | **Man-made fiber portion** | | **Surfactant** |
|---|---|---|---|---|
| | **Material/Amount [wt. %]** | **Material/Amount [wt. %]** | **Linear mass density of fibers [lb/ft³ / kg/m³]** | |
| Example 6 | Natural refined pine wood chips fiber/ 96 | Polyester core and polypropylene sheet / 4 | 3 / 48.06 | No |
| Example 7 | Natural refined pine wood chips / 93 | Polyester core and polypropylene sheet / 7 | 4 / 64.07 | No |
| Example 8 | Natural refined pine wood chips / 96 | Polyester core and polypropylene sheet / 4 | 3 / 48.06 | Yes |
| Example 9 | Natural refined pine wood chips / 93 | Polyester core and polypropylene sheet / 7 | 4 / 64.07 | Yes |
| Example 10 | Natural refined pine wood chips fiber/ 96 | Polyester core and polypropylene sheet / 4 | 3 / 48.06 | Yes |
| Example 11 | Natural refined pine wood chips / 93 | Polyester core and polypropylene sheet / 7 | 4 / 64.07 | Yes |
| Comparative example B - Rockwool slab | Basalt rock, chalk spun, compressed fiber | - | - | - |
| Comparative examples C - Coco coir slab | Coco coir loose fiber | - | - | - |

Examples 6-11 and Comparative Examples B and C were tested in a pepper growing trial having the following specifications. The plot size of each grow slab was 100 cm x 20 cm x 7 cm. The trial lasted 84 days including the day of installation and the day of the harvest. The trial took place from mid-fall to mid-winter season. Each example and comparative example had 4 replications. Only natural daylight was supplied with no supplemental lighting provided. There was complete randomization of Examples and Comparative Examples. Irrigation was provided as needed. Species grown included Sprinter F1 pepper green to red bell. Fertilizer used included 160 ppm (16-4-17, 15.5-0-0, 10-0-0) of concentrate mix, pH 6.3, EC about 1200 µS/cm. Various results of the trial are captured in Table 10 below.

**Table 10 - Results for Examples 6-11 and Comparative Examples B and C**

| **Example/Comparative Example** | **Average Fruit Quantity [average amount of individual fruits]** | **Average Fruit Fresh Weight [g]** | **Foliage Dry Weight [g]** |
|---|---|---|---|
| Example 6 | 656.195 | 5.5 | 24.1 |
| Example 7 | 662.283 | 6.75 | 43.6 |
| Example 8 | 586.525 | 6.5 | 30.3 |
| Example 9 | 541.383 | 5.75 | 35.8 |
| Example 10 | 650.885 | 6.75 | 32.5 |
| Example 11 | 718.785 | 6 | 29.0 |
| Comparative Example B | 461.223 | 4.75 | 33.3 |
| Comparative Example C | 663.475 | 8 | 33.8 |

### Examples 12-15

Examples 12-15 were tested in a cucumber growth trial. The properties of Examples 12-15 and Comparative Examples D and E are listed in Table 11 below.

**Table 11 - Properties of Examples 12-15 and Comparative Examples D and E**

| **Example No.** | **Natural portion** | **Man-made fiber portion** | |
|---|---|---|---|
| | **Material/Amount [wt. %]** | **Material/Amount [wt. %]** | **Linear mass density of fibers [lb/ft³ / kg/m³]** |
| Example 12 | Natural refined pine wood chips fiber/ 94 | Polyester core and polypropylene sheet / 6 | 3 / 48.06 |
| Example 13 | Natural refined pine wood chips / 94 | Polyester core and polypropylene sheet / 6 | 4 / 64.07 |
| Example 14 | Natural refined pine wood chips / 94 | Polyester core and polypropylene sheet / 6 | 3 / 48.06 |
| Example 15 | Natural refined pine wood chips / 94 | Polyester core and polypropylene sheet / 6 | 4 / 64.07 |
| Comparative example D - Rockwool slab | Basalt rock, chalk spun, compressed fiber | - | - |
| Comparative examples E - Coco coir slab | Coco coir loose fiber | - | - |

Examples 12-15 and Comparative Examples D and E were tested in a cucumber growing trial having the following specifications. The plot size of each grow slab was 36.56 cm x 15.24 cm x 10.16 cm or 14" x 6" x 4". The trial lasted 8 weeks, specifically 95 days including the day of installation and the day of the harvest. The trial took place from mid-winter to mid-spring season. Each example and comparative example had 5 replications. Only natural daylight was supplied with no supplemental lighting provided. There was complete randomization of Examples and Comparative Examples. Fertigation was provided as follows: 150 ppm (20-10-20); 100 ppm (16-4-17), 30 ppm (15.5-0-0 Cal-trade), 30 ppm (10-0-0 Mag-trate). Ppm varied based on a stage of crop: 5-12-26; 15.5-0-0 Cal-trate; 10-0-0 Mag-trate. Species grown included Cucumber "Elsie." Various results of the trial are captured in Table 12 below.

**Table 12 - Results for Examples 12-15 and Comparative Examples D and E**

| **Example/Comparative Example** | **Total Fruit Average Yield [g]** | **Individual Average Fruit Weight [g]** | **Total Mature Fruit Harvested [amount of individual fruits]** | **Shoot Dry weight [g]** |
|---|---|---|---|---|
| Example 12 | 21.699 | 460 | 51 | 161.59 |
| Example 13 | 18.696 | 555 | 42 | 148.40 |
| Example 14 | 16.738 | 483 | 39 | 141.24 |
| Example 15 | 16.945 | 487 | 43 | 138.58 |
| Comparative Example D | 18.838 | 468 | 46 | 157.23 |
| Comparative Example E | 10.008 | 468 | 46 | 154.03 |

While exemplary embodiments are described above, it is not intended that these embodiments describe all possible forms of the invention. Rather, the words used in the specification are words of description rather than limitation, and it is understood that various changes may be made without departing from the scope of the claims. Additionally, the features of various implementing embodiments may be combined to form further embodiments of the invention.

## Claims

1. A hydroponic growing medium (39) comprising: a three-dimensional self-supporting, soil-free hydroponic substrate (39) having:
a dry bulk density of about 28,83 kg/m3 to 160,185 kg/m3 and including
a man-made fiber portion (24), **characterized in that**:
the man-made fiber portion (24) is about 2 to 10 weight %, based on the total weight of the growing medium (39); and **in that**
the soil-free hydroponic substrate (39) comprises
about 90 to 98 weight % of a natural fiber portion (22) having refined wood fiber, based on the total weight of the hydroponic growing medium (39).

2. The hydroponic growing medium (39) of claim 1, wherein the hydroponic growing medium (39) has total porosity of about 90 to 99 volume %.

3. The hydroponic growing medium (39) of claim 1 or 2, wherein the hydroponic growing medium (39) has about 30 to 60 percent of air space.

4. The hydroponic growing medium (39) according to at least one of claims 1-3, wherein the hydroponic growing medium (39) has volumetric water oxygen at pF 1 of about 50 to 80 %.

5. The hydroponic growing medium (39) according to at least one of claims 1-4, wherein the total water holding capacity of the hydroponic growing medium (39) is about 40 to 80 weight %.

6. The hydroponic growing medium (39) according to at least one of claims 1-5, wherein the man-made fiber portion (24) includes at least one type of bi-component fiber.

7. The hydroponic growing medium (39) according to claim 6, wherein the bi-component fiber includes
an outer shell having a first material and
a core having a second material,
the first material having a lower melting temperature than the second material.

8. The hydroponic growing medium (39) according to at least one of claims 1-7, wherein the three-dimensional self-supporting substrate (39) forms a slab (40) having at least one recess with a diameter, each side of the recess being enclosed by a body of the substrate.

9. The hydroponic growing medium (39) according to claim 8, wherein the slab (40) has a dry bulk density of about 28,83 kg/m3 to about 80,09 kg/m3.

10. The hydroponic growing medium (39) according to at least one of claims 1-9, wherein the three-dimensional self-supporting substrate (39) forms a propagation cube.

11. The hydroponic growing medium (39) according to claim 10, wherein the propagation cube has a dry bulk density of about 64,07 kg/m3 to about 160,185 kg/m3.

12. The hydroponic growing medium (39) according to at least one of claims 1-11, wherein the hydroponic growing medium (39) is sterile.

13. The hydroponic growing medium of claim 1, wherein the natural fiber portion further includes coconut coir in the amount of about 5 to 25 wt.%, based on the total weight of the natural fiber portion.

14. The hydroponic growing medium of claim 1, wherein the natural fiber portion has an average length to width ratio of fibers in a sieve of 1,18 mm of about 14.899:1 to 30.602:1 and in a sieve of 300 µm of about 39.615:1 to 55.507:1.

15. The hydroponic growing medium of claim 8, wherein the at least one recess has a depth equal to about 5-55% of the slab's height.

16. The hydroponic growing medium of claim 1, further comprising a bag, wherein the self-supporting, soil-free hydroponic substrate is enclosed in a bag.

17. A method of preparing the hydroponic growing medium (39) according to at least one of claims 1-16, prepared by a process comprising:
combining a loose metered volume of the man-made fiber portion with the natural fiber portion and reducing the fiber to a predetermined thickness to form a compressed matrix,
exposing the compressed matrix to elevated temperatures to melt at least a portion of the fiber, and
applying pressure to the compressed matrix to generate the three-dimensional structure of the hydroponic growing medium.

18. The method of preparing according to claim 17, wherein the process further includes a sterilization and/or stabilization step.

## Patentansprüche

1. Hydroponik-Kultursubstrat (39), umfassend:
ein dreidimensionales, selbsttragendes, erdfreies Hydroponik-Substrat (39) mit:
einer Trockenrohdichte von etwa 28,83 kg/m3 bis 160,185 kg/m3 und mit
einem Chemiefaseranteil (24), **dadurch gekennzeichnet, dass**:
der Chemiefaseranteil (24) , bezogen auf das Gesamtgewicht des Kultursubstrats (39), etwa 2 bis 10 Gew.-% beträgt; und dass das erdfreie Hydroponik-Substrat (39) etwa 90 bis 98 Gew.-%, bezogen auf das Gesamtgewicht des Hydroponik-Kultursubstrats (39), eines Naturfaseranteils (22) mit veredelter Holzfaser umfasst.

2. Hydroponik-Kultursubstrat (39) nach Anspruch 1, wobei das Hydroponik-Kultursubstrat (39) eine Gesamtporosität von etwa 90 bis 99 Volumenprozent aufweist.

3. Hydroponik-Kultursubstrat (39) nach Anspruch 1 oder 2, wobei das Hydroponik-Kultursubstrat (39) einen Luftraum von etwa 30 bis 60 % aufweist.

4. Hydroponik-Kultursubstrat (39) nach mindestens einem der Ansprüche 1-3, wobei das Hydroponik-Kultursubstrat (39) volumetrischen Wassersauerstoff bei pF 1 von etwa 50 bis 80 % aufweist.

5. Hydroponik-Kultursubstrat (39) nach mindestens einem der Ansprüche 1 bis 4, bei dem das Gesamtwasserhaltevermögen des Hydroponik-Kultursubstrats (39) etwa 40 bis 80 Gew.-% beträgt.

6. Hydroponik-Kultursubstrat (39) nach mindestens einem der Ansprüche 1-5, bei dem der Chemiefaseranteil (24) mindestens eine Art von Zweikomponentenfaser enthält.

7. Hydroponik-Kultursubstrat (39) nach Anspruch 6, bei dem die Zweikomponentenfaser
eine äußere Hülle mit einem ersten Material und
einen Kern mit einem zweiten Material
umfasst, wobei das erste Material eine niedrigere Schmelztemperatur hat als das zweite Material.

8. Hydroponik-Kultursubstrat (39) nach mindestens einem der Ansprüche 1-7, bei dem das dreidimensionale selbsttragende Substrat (39) eine Platte (40) mit mindestens einer Aussparung mit einem Durchmesser bildet, wobei jede Seite der Aussparung von einem Körper des Substrats umschlossen ist.

9. Hydroponik-Kultursubstrat (39) nach Anspruch 8, bei dem die Platte (40) eine Trockenrohdichte von etwa 28,83 kg/m3 bis etwa 80,09 kg/m3 aufweist.

10. Hydroponik-Kultursubstrat (39) nach mindestens einem der Ansprüche 1-9, bei dem das dreidimensionale selbsttragende Substrat (39) einen Anzuchtwürfel bildet.

11. Hydroponik-Kultursubstrat (39) nach Anspruch 10, bei dem der Anzuchtwürfel eine Trockenrohdichte von etwa 64,07 kg/m3 bis etwa 160,185 kg/m3 aufweist.

12. Hydroponik-Kultursubstrat (39) nach mindestens einem der Ansprüche 1-11, wobei das Hydroponik-Kultursubstrat (39) steril ist.

13. Hydroponik-Kultursubstrat nach Anspruch 1, wobei der Naturfaseranteil ferner Kokosfasern in einer Menge von etwa 5 bis 25 Gew.-%, bezogen auf das Gesamtgewicht des Naturfaseranteils, enthält.

14. Hydroponik-Kultursubstrat nach Anspruch 1, bei dem der Naturfaseranteil ein durchschnittliches Verhältnis von Länge zu Breite der Fasern in einem Sieb von 1, 18mm von etwa 14,899:1 bis 30,602:1 und in einem Sieb von 300µm von etwa 39,615:1 bis 55,507:1 aufweist.

15. Hydroponik-Kultursubstrat nach Anspruch 8, bei dem die mindestens eine Vertiefung eine Tiefe von etwa 5-55% der Höhe der Platte aufweist.

16. Hydroponik-Kultursubstrat nach Anspruch 1, das ferner einen Beutel umfasst, wobei das selbsttragende, erdfreie Hydroponik-Substrat in einem Beutel eingeschlossen ist.

17. Verfahren zur Herstellung des Hydroponik-Kultursubstrats (39) nach mindestens einem der Ansprüche 1-16, hergestellt durch ein Verfahren mit den Schritten:
Kombinieren eines locker abgemessenen Volumens des Chemiefaseranteils mit dem Naturfaseranteil und Reduzieren der Faser auf eine vorgegebene Dicke, um eine komprimierte Matrix zu bilden,
Setzen der komprimierten Matrix unter erhöhte Temperaturen, um mindestens einen Teil der Faser zu schmelzen, und
Ausüben von Druck auf die komprimierte Matrix, um die dreidimensionale Struktur des Hydroponik-Kultursubstrats zu erzeugen.

18. Verfahren zur Herstellung nach Anspruch 17, wobei das Verfahren ferner einen Sterilisations- und/oder Stabilisierungsschritt umfasst.

## Revendications

1. Milieu (39) de culture hydroponique comprenant :
un substrat (39) hydroponique exempt de terre autoportant tridimensionnel présentant :
une masse volumique apparente à sec d'environ 28,83 kg/m³ à 160,185 kg/m³ et incluant
une partie en fibres synthétiques (24), **caractérisé en ce que** :
la partie en fibres synthétiques (24) représente environ 2 à 10 % en poids, sur la base du poids total du milieu (39) de culture ; et **en ce que** le substrat (39) hydroponique exempt de terre comprend environ 90 à 98 % en poids d'une partie en fibres naturelles (22) incluant des fibres de bois raffinées, sur la base du poids total du milieu (39) de culture hydroponique.

2. Milieu (39) de culture hydroponique selon la revendication 1, dans lequel le milieu (39) de culture hydroponique présente une porosité totale d'environ 90 à 99 % en volume.

3. Milieu (39) de culture hydroponique selon la revendication 1 ou 2, dans lequel le milieu (39) de culture hydroponique présente environ 30 à 60 % d'espace d'air.

4. Milieu (39) de culture hydroponique selon au moins l'une des revendications 1-3, dans lequel le milieu (39) de culture hydroponique présente une teneur en oxygène dans l'eau pour 1 pF d'environ 50 à 80 % en volume.

5. Milieu (39) de culture hydroponique selon au moins l'une des revendications 1-4, dans lequel la capacité de rétention d'eau totale du milieu (39) de culture hydroponique est d'environ 40 à 80 % en poids.

6. Milieu (39) de culture hydroponique selon au moins l'une des revendications 1-5, dans lequel la partie en fibres synthétiques (24) inclut au moins un type de fibres à deux composants.

7. Milieu (39) de culture hydroponique selon la revendication 6, dans lequel la fibre à deux composants inclut
une coque extérieure formée d'un premier matériau et
un noyau formée d'un second matériau,
le premier matériau ayant une température de fusion inférieure à celle du second matériau.

8. Milieu (39) de culture hydroponique selon au moins l'une des revendications 1-7, dans lequel le substrat (39) autoportant tridimensionnel forme une dalle (40) présentant au moins un renfoncement avec un diamètre, chaque côté du renfoncement étant entouré par le corps du substrat.

9. Milieu (39) de culture hydroponique selon la revendication 8, dans lequel la dalle (40) présente une masse volumique apparente à sec d'environ 28,83 kg/m³ à 80,09 kg/m3.

10. Milieu (39) de culture hydroponique selon au moins l'une des revendications 1-9, dans lequel le substrat (39) autoportant tridimensionnel forme un cube de propagation.

11. Milieu (39) de culture hydroponique selon la revendication 10, dans lequel le cube de propagation présente une masse volumique apparente à sec d'environ 64,07 kg/m³ à 160,185 kg/m3.

12. Milieu (39) de culture hydroponique selon au moins l'une des revendications 1-11, dans lequel le milieu (39) de culture hydroponique est stérile.

13. Milieu (39) de culture hydroponique selon la revendication 1, dans lequel la partie en fibres naturelles inclut en outre de la fibre de coco dans une proportion d'environ 5 à 25 % en poids, sur la base du poids total de la partie en fibres naturelles.

14. Milieu (39) de culture hydroponique selon la revendication 1, dans lequel la partie en fibres naturelles présente un rapport de la longueur à la largeur moyen de fibres d'environ 14,899:1 à 30,602:1 pour un tamisage de 1,18 mm et d'environ 39,615:1 à 55,507:1 pour un tamisage de 300 µm.

15. Milieu (39) de culture hydroponique selon la revendication 8, dans lequel ledit au moins un renfoncement présente une profondeur égale à environ 5 à 55 % de la hauteur de la dalle.

16. Milieu (39) de culture hydroponique selon la revendication 1, comprenant en outre un sac, dans lequel le substrat hydroponique exempt de terre autoportant est enveloppé dans un sac.

17. Méthode de préparation du milieu (39) de culture hydroponique selon au moins l'une des revendications 1-16, préparée par un procédé prévoyant de :
combiner un volume mesuré en vrac de la partie en fibres synthétiques avec la partie en fibres naturelles et réduire la fibre à une épaisseur prédéterminée afin de former une matrice compressée,
soumettre la matrice compressée à des températures élevées afin de faire fondre au moins une partie de la fibre, et
exercer une pression sur la matrice compressée afin de générer la structure tridimensionnelle du milieu de culture hydroponique.

18. Méthode de préparation selon la revendication 17, dans laquelle le procédé inclut en outre une étape de stérilisation et/ou de stabilisation.
